# EUROPEAN PATENT APPLICATION

(11) **EP 4 586 686 A1**
(43) Date of publication of application: **16.07.2025**
(21) Application number: 23870349.0
(22) Date of filing: 14.09.2023
(51) Int. Cl.: H04W 36/00

(54) **COMMUNICATION METHOD, COMMUNICATION DEVICE, MEDIUM AND PROGRAM PRODUCT**

(30) Priority: 27.09.2022 CN 202211185681; 10.05.2023 CN 202310532622
(71) Applicant: Huawei Technologies Co., Ltd., Shenzhen, Guangdong 518129 (CN)
(72) Inventor: ZHU, Shichao, Shenzhen, Guangdong 518129 (CN); ZHU, Yuanping, Shenzhen, Guangdong 518129 (CN); SUN, Fei, Shenzhen, Guangdong 518129 (CN); SHI, Yulong, Shenzhen, Guangdong 518129 (CN)
(74) Representative: Körber, Martin Hans
(86) International application number: PCT/CN2023/118694
(87) International publication number: WO 2024/067112

(57) **Abstract**

Embodiments of the present disclosure provide a communication method, a communication device, a computer-readable storage medium, and a computer program product. The communication method includes: When a relay node serving a terminal via a source cell migrates from a first donor node to a second donor node, the relay node sends information to the first donor node or the second donor node, where the information indicates a target cell to which the terminal is to be handed over, the source cell is a cell served by a first distributed unit DU of the relay node, the target cell is a cell served by a second DU of the relay node, and the first DU and the second DU respectively have F1 interfaces with the first donor node and the second donor node. The relay node receives handover information from the first donor node, where the handover information indicates the terminal to hand over to the target cell. In addition, the relay node sends the handover information to the terminal via the source cell. In this manner, the donor node may learn of the target cell of the terminal without waiting for measurement and reporting of the terminal.

## Description

This application claims priorities to Chinese Patent Application No. 202211185681.4, filed on September 27, 2022 and entitled "COMMUNICATION METHOD, COMMUNICATION DEVICE, MEDIUM, AND PROGRAM PRODUCT", and to Chinese Patent Application No. 202310532622.8, filed on May 10, 2023 and entitled "COMMUNICATION METHOD, COMMUNICATION DEVICE, MEDIUM, AND PROGRAM PRODUCT", both of which are incorporated herein by reference in their entireties.

### TECHNICAL FIELD

The present disclosure generally relates to the communication field, and more specifically, to a communication method, a communication device, a computer-readable storage medium, and a computer program product.

### BACKGROUND

In comparison with a 4th generation mobile communication system, in 5th generation mobile communication (5G), stricter requirements are imposed on network performance indicators, for example, 1000-fold capacity improvement, wider coverage, and ultra-high reliability and ultra-low latency. Considering that high-frequency carrier frequency resources are abundant, in a hotspot area, to meet a requirement for an ultra-high capacity of 5G, high-frequency small cell networking becomes increasingly popular. High-frequency carriers have a poor propagation characteristic, are severely attenuated if being blocked, and have small coverage. Therefore, a large quantity of small cells need to be densely deployed. Correspondingly, it is costly to provide optical fiber backhaul for the large quantity of densely deployed small cells, and construction is difficult. Therefore, an economical and convenient backhaul solution is needed. In addition, in consideration of the requirement of the wider coverage, it is difficult and costly to deploy optical fibers for network coverage in some remote areas. Therefore, a flexible and convenient access and backhaul solution is also needed.

An integrated access and backhaul (Integrated Access and Backhaul, IAB) technology provides an idea to resolve the foregoing two problems. An access link (Access Link) and a backhaul link (Backhaul Link) thereof each use a wireless transmission solution, to reduce the deployment of the optical fibers. However, in a communication system based on the integrated access and backhaul technology, there are still some problems that need to be resolved in aspects such as communication efficiency and a communication procedure.

### SUMMARY

Embodiments of the present disclosure provide a communication method, a communication device, a computer-readable storage medium, and a computer program product.

According to a first aspect of the present disclosure, a communication method is provided. The method includes: When a relay node serving a terminal via a source cell migrates from a first donor node to a second donor node, the relay node sends information to the first donor node or the second donor node, where the information indicates a target cell to which the terminal is to be handed over, the source cell is a cell served by a first distributed unit DU of the relay node, the target cell is a cell served by a second DU of the relay node, and the first DU and the second DU respectively have F1 interfaces with the first donor node and the second donor node. The relay node receives handover information from the first donor node, where the handover information indicates the terminal to hand over to the target cell. In addition, the relay node sends the handover information to the terminal via the source cell. In this manner, the donor node may learn of the target cell of the terminal without waiting for measurement and reporting of the terminal.

In some embodiments, the information sent to the first donor node includes a correspondence between the target cell and the terminal or a correspondence between the target cell and the source cell. In this way, the first donor node may accurately learn of the target cell based on the correspondence.

In some embodiments, the information sent to the second donor node includes a correspondence between the target cell and the terminal. In this way, the second donor node may accurately learn of the target cell based on the correspondence.

In some embodiments, the sending information to the first donor node includes: When a central unit CU of the first donor node sends a handover request used for a mobile termination MT of the relay node to a CU of the second donor node earlier than an interface is set up between the second DU of the relay node and the CU of the second donor node, the first DU or the MT of the relay node sends the information to the CU of the first donor node. In this way, before the interface between the second DU of the relay node and the CU of the second donor node is set up, the first donor node may first determine the target cell based on the received information.

In some embodiments, the sending information to the second donor node includes: When an interface is set up between the second DU of the relay node and a central unit CU of the second donor node earlier than a CU of the first donor node sends a handover request used for a mobile termination MT of the relay node to the CU of the second donor node, the second DU of the relay node sends the information to the CU of the second donor node. In this way, after the interface between the second DU of the relay node and the CU of the second donor node is set up, the second donor node may effectively determine the target cell based on the received information.

In some embodiments, the method further includes: The relay node starts the second DU after sending the information to the CU of the first donor node. In this way, after the target cell is determined, the second CU may be started, to achieve energy saving.

In some embodiments, the method further includes: The relay node starts the second DU before sending the information to the CU of the second donor node. In this way, the second DU may be first started to prepare for the handover of the terminal, and then the information is sent to the CU of the second donor node.

In some embodiments, the starting the second DU includes: The relay node configures a resource of the target cell to correspond to a resource of the source cell. In this manner, the resource of the source cell is configured to correspond to that of the target cell, so that the target cell can be determined based on the correspondence without the measurement of the terminal.

In some embodiments, the configuring a resource of the target cell to correspond to a resource of the source cell includes: configuring a beam direction and/or a time domain resource of the target cell to be the same as a beam direction and/or a time domain resource of the source cell; and configuring a frequency domain resource of the target cell not to overlap a frequency domain resource of the source cell. In this way, the resource of the source cell can effectively correspond to that of the target cell.

In some embodiments, the sending information to the first donor node includes at least one of the following: The first DU of the relay node sends the information via an F1 application protocol F1AP message; and the MT of the relay node sends the information via a radio resource control RRC message.

In some embodiments, the information is sent via an interface setup request message. In this way, the information may be carried in an existing message and sent, to avoid specially designing a new message for sending the information.

In some embodiments, the method further includes at least one of the following: The first DU of the relay node sends, to the central unit CU of the first donor node, an indication indicating that the second DU is ready to provide a service for the terminal; or the mobile termination MT of the relay node sends, to the CU of the first donor node, an indication indicating that the second DU is ready to provide a service for the terminal. In this way, the first donor node can effectively learn that the second DU is ready to provide the service for the terminal, to facilitate a handover procedure.

In some embodiments, the method further includes: The second DU of the relay node receives an interface setup response message from the central unit CU of the second donor node, where the interface setup response message indicates a to-be-activated cell to the second DU, and the to-be-activated cell is determined based on the target cell. In this way, the corresponding target cell may be activated for the handover of the terminal.

According to a second aspect of the present disclosure, a communication method is provided. The method includes: When a relay node serving a terminal via a source cell migrates from a first donor node to a second donor node, the first donor node receives information from the relay node, where the information indicates a target cell to which the terminal is to be handed over, the source cell is a cell served by a first distributed unit DU of the relay node, the target cell is a cell served by a second DU of the relay node, and the first DU and the second DU respectively have F1 interfaces with the first donor node and the second donor node. In addition, the first donor node sends handover information to the relay node, where the handover information indicates the terminal to hand over to the target cell. In this manner, the first donor node may learn of the target cell of the terminal without waiting for measurement and reporting of the terminal.

In some embodiments, the information includes a correspondence between the target cell and the terminal or a correspondence between the target cell and the source cell. In this way, the first donor node may accurately learn of the target cell based on the correspondence.

In some embodiments, the method further includes: A central unit CU of the first donor node sends a handover request to a CU of the second donor node, where the handover request is used for at least one of the following two: the handover of the terminal, where the handover request indicates the target cell; and a handover of a mobile termination MT of the relay node from the CU of the first donor node to the CU of the second donor node. In this way, the terminal and the MT may be handed over based on one handover request.

In some embodiments, the method further includes: indicating the target cell by including an identifier of the target cell and an identifier of the second donor node in the handover request. In this way, the target cell may be accurately specified.

In some embodiments, the handover request further includes the following indication: whether the second donor node needs to send a user plane service of the terminal through a path associated with the first donor node. In this way, the path associated with the first donor node may be flexibly set up, to effectively support various migration manners.

In some embodiments, the receiving information from the relay node includes: When the central unit CU of the first donor node sends the handover request used for the mobile termination MT of the relay node to the CU of the second donor node earlier than an interface is set up between the second DU of the relay node and the CU of the second donor node, the CU of the first donor node receives the information from the first DU or the MT of the relay node. In this way, before the interface between the second DU of the relay node and the CU of the second donor node is set up, the first donor node may first determine the target cell based on the received information.

In some embodiments, the receiving the information from the first DU includes: The CU of the first donor node receives the information from the first DU via an F1 application protocol F1AP message.

In some embodiments, the receiving the information from the MT includes: The CU of the first donor node receives the information from the MT via a radio resource control RRC message. In this way, specially designing a new message for sending the information is avoided.

In some embodiments, the method further includes at least one of the following: The central unit CU of the first donor node receives, from the first DU of the relay node, an indication indicating that the second DU is ready to provide a service for the terminal; or the CU of the first donor node receives an indication from the mobile termination MT of the relay node. In this way, the first donor node can effectively learn that the second DU is ready to provide the service for the terminal, to facilitate a handover procedure.

According to a third aspect of the present disclosure, a communication method is provided. The method includes: When a relay node serving a terminal via a source cell migrates from a first donor node to a second donor node, the first donor node receives, from the second donor node, a notification message related to a target cell to which the terminal is to be handed over, where the source cell is a cell served by a first distributed unit DU of the relay node, the target cell is a cell served by a second DU of the relay node, the first DU and the second DU respectively have F1 interfaces with the first donor node and the second donor node, and the notification message indicates one of the following: indicates that identification information indicating the target cell is default or invalid in a handover request used for the handover; or indicates the target cell. In addition, the first donor node sends, to the second donor node based on the notification message, the handover request used for the handover of the terminal. In this manner, the first donor node may learn, from the second donor node, whether the target cell needs to be indicated in the handover request, so that a flexible handover can be implemented.

In some embodiments, the sending the handover request includes: If determining that the notification message indicates that the identification information is default or invalid in the handover request, the first donor node sends, to the second donor node, the handover request in which the identification information is default or invalid. In this way, transmission of the handover request may be performed when the target cell does not need to be indicated.

In some embodiments, the sending the handover request includes: If determining that the notification message indicates the target cell, the first donor node sends, to the second donor node, the handover request indicating the target cell. In this way, the target cell may be indicated in the handover request, to facilitate a handover process of the terminal.

In some embodiments, the handover request further includes the following indication: whether the second donor node needs to send a user plane service of the terminal through a path associated with the first donor node. In this way, the path associated with the first donor node may be flexibly set up, to effectively support various migration manners.

According to a fourth aspect of the present disclosure, a communication method is provided. The method includes: When a relay node serving a terminal via a source cell migrates from a first donor node to a second donor node, the second donor node receives information from the first donor node or the relay node, where the information indicates a target cell to which the terminal is to be handed over, the source cell is a cell served by a first distributed unit DU of the relay node, the target cell is a cell served by a second DU of the relay node, and the first DU and the second DU respectively have F1 interfaces with the first donor node and the second donor node. In this manner, the second donor node may learn of the target cell of the terminal without waiting for measurement and reporting of the terminal.

In some embodiments, the receiving information from the first donor node includes: A central unit CU of the second donor node receives, from a CU of the first donor node, a handover request including the information, where the handover request is used for at least one of the following two: the handover of the terminal; and a handover of a mobile termination MT of the relay node from the CU of the first donor node to the CU of the second donor node. In this way, the terminal and the MT may be handed over based on one handover request.

In some embodiments, the handover request further includes the following indication: whether the second donor node needs to send a user plane service of the terminal through a path associated with the first donor node. In this way, the path associated with the first donor node may be flexibly set up, to effectively support various migration manners.

In some embodiments, the method further includes: The second donor node sends a path setup request to the first donor node based on the indication included in the handover request. In this way, the setup of the path associated with the first donor node may be facilitated, to effectively support the various migration manners.

In some embodiments, the method further includes: The second donor node performs an admission decision on the MT of the relay node and the terminal. In this way, an efficient decision may be made on admission of the MT and the terminal by comprehensively considering load.

In some embodiments, the method further includes: The CU of the second donor node determines, based on the target cell, a cell to be activated by the second DU. In addition, the CU of the second donor node sends an interface setup response message to the second DU of the relay node, where the interface setup response message indicates the to-be-activated cell to the second DU. In this way, the second donor node may efficiently learn, based on the target cell in the received information, of the to-be-activated cell indicated to the second DU.

In some embodiments, the receiving information from the relay node includes: When an interface is set up between a central unit CU of the second donor node and the second DU of the relay node earlier than a CU of the first donor node sends a handover request used for a mobile termination MT of the relay node to the CU of the second donor node, the CU of the second donor node receives the information from the second DU of the relay node. In this way, after the interface between the second DU of the relay node and the CU of the second donor node is set up, the second donor node may effectively determine the target cell based on the received information.

In some embodiments, the information is received via an interface setup request message. In this way, specially designing a new message for sending the information is avoided.

In some embodiments, the method further includes: The CU of the second donor node sends a notification message to the CU of the first donor node, where the notification message indicates that identification information indicating the target cell is default or invalid in a handover request used for the handover. In addition, the CU of the second donor node receives the handover request from the CU of the first donor node. In this manner, the first donor node may learn, from the second donor node, whether the target cell needs to be indicated in the handover request, so that a flexible handover can be implemented.

In some embodiments, the method further includes: The CU of the second donor node sends a notification message to the CU of the first donor node, where the notification message indicates the target cell. In addition, the CU of the second donor node receives, from the CU of the first donor node, a handover request used for the handover, where the handover request indicates the target cell. In this way, the target cell may be indicated in the handover request, to facilitate a handover process of the terminal.

According to a fifth aspect of the present disclosure, a communication method is provided. The method includes: When a relay node serving a terminal via a source cell migrates from a first donor node to a second donor node, the first donor node sends a message to the second donor node, where the message includes a context of the terminal or a target cell to which the terminal is to be handed over, the source cell is a cell served by a first distributed unit DU of the relay node, the target cell is a cell served by a second DU of the relay node, the first DU and the second DU respectively have F1 interfaces with the first donor node and the second donor node, and the message further includes the following indication: whether the second donor node needs to send a user plane service of the terminal through a path associated with the first donor node. In this manner, the path associated with the first donor node may be flexibly set up, to effectively support various migration manners.

According to a sixth aspect of the present disclosure, a communication method is provided. The method includes: When a relay node serving a terminal via a source cell migrates from a first donor node to a second donor node, the second donor node receives a message from the first donor node, where the message includes a context of the terminal or a target cell to which the terminal is to be handed over, the source cell is a cell served by a first distributed unit DU of the relay node, the target cell is a cell served by a second DU of the relay node, the first DU and the second DU respectively have F1 interfaces with the first donor node and the second donor node, and the message further includes the following indication: whether the second donor node needs to send a user plane service of the terminal through a path associated with the first donor node. In this manner, the path associated with the first donor node may be flexibly set up, to effectively support various migration manners.

According to a seventh aspect of the present disclosure, a communication method is provided. The method includes: when a distributed unit DU of a relay node serving a terminal via a source cell migrates from a first donor node to a second donor node, sending indication information to the terminal, where the indication information indicates a target beam to be used by the terminal in a target cell to which the terminal is handed over, the target beam is the same as a source beam used by the terminal in the source cell, the source cell is a cell served by a first DU of the relay node, the target cell is a cell served by a second DU of the relay node, and the first DU and the second DU respectively have F1 interfaces with the first donor node and the second donor node. In this manner, the beam used by the terminal in the target cell may be determined without performing beam measurement, to reduce signaling overheads and improve transmission efficiency.

In some embodiments, the indication information indicates at least one of the following: a beam used by the terminal in a same direction or index as the source beam used by the terminal in the source cell; an index of the target beam; or an index of the source beam. In this way, the target beam may be effectively determined.

In some embodiments, the method further includes: obtaining beam information from the relay node or the second donor node, where the beam information is used to determine the target beam to be used by the terminal in the target cell, and the beam information indicates at least one of the following: a beam used in the target cell in a same direction or index as the source beam used in the source cell; or a correspondence between the beam in the source cell and the beam in the target cell. In this way, using the target beam that is the same as the source beam may be effectively determined.

In some embodiments, the method further includes: sending beam indication information related to the target beam to the second donor node, where the beam indication information indicates at least one of the following: the beam used in the target cell in the same direction or index as the source beam used in the source cell, the index of the target beam, or the index of the source beam. In this way, an effective indication of using the target beam that is the same as the source beam may be implemented.

In some embodiments, the method further includes: receiving, from the second donor node, beam acknowledgment information related to the target beam, where the beam acknowledgment indication includes at least one of the following: an acknowledgment of the beam used in the target cell in the same direction or index as the source beam used in the source cell, or the index of the target beam. In this way, the target beam that is the same as the source beam may be effectively used.

According to an eighth aspect of the present disclosure, a communication method is provided. The method includes: when a distributed unit DU of a relay node serving a terminal via a source cell migrates from a first donor node to a second donor node, receiving indication information from the first donor device or the relay node, where the indication information indicates a target beam to be used by the terminal in a target cell to which the terminal is handed over, the target beam is the same as a source beam used by the terminal in the source cell, the source cell is a cell served by a first DU of the relay node, the target cell is a cell served by a second DU of the relay node, and the first DU and the second DU respectively have F1 interfaces with the first donor node and the second donor node. In this manner, the beam used by the terminal in the target cell may be determined without performing beam measurement, to reduce signaling overheads and improve transmission efficiency.

In some embodiments, the indication information indicates at least one of the following: a beam used by the terminal in a same direction or index as the source beam used by the terminal in the source cell; an index of the target beam; or an index of the source beam. In this way, the target beam may be effectively determined.

According to a ninth aspect of the present disclosure, a communication method is provided. The method includes: when a distributed unit DU of a relay node serving a terminal via a source cell migrates from a first donor node to a second donor node, sending beam information to the first donor node, where the beam information is used to determine a target beam to be used by the terminal in a target cell to which the terminal is handed over, the target beam is the same as a source beam used by the terminal in the source cell, the source cell is a cell served by a first DU of the relay node, the target cell is a cell served by a second DU of the relay node, and the first DU and the second DU respectively have F1 interfaces with the first donor node and the second donor node. In this manner, the beam used by the terminal in the target cell may be determined without performing beam measurement, to reduce signaling overheads and improve transmission efficiency.

In some embodiments, the beam information indicates at least one of the following: a beam used in the target cell in a same direction or index as the source beam used in the source cell; or a correspondence between the beam in the source cell and the beam in the target cell. In this way, using the target beam that is the same as the source beam may be effectively determined.

In some embodiments, the method further includes: receiving the beam information from the relay node. In this way, the beam information may be effectively obtained.

In some embodiments, the method further includes: receiving, from the first donor node, beam indication information related to the target beam, where the beam indication information indicates at least one of the following: the beam used in the target cell in the same direction or index as the source beam used in the source cell, the index of the target beam, or the index of the source beam. In this way, an effective indication of using the target beam that is the same as the source beam may be implemented.

In some embodiments, the method further includes: sending beam acknowledgment information related to the target beam to the first donor node, where the beam acknowledgment indicates at least one of the following: an acknowledgment of the beam used in the target cell in the same direction or index as the source beam used in the source cell, or the index of the target beam. In this way, the target beam that is the same as the source beam may be effectively used.

According to a tenth aspect of the present disclosure, a communication method is provided. The method includes: when a distributed unit DU of a relay node serving a terminal via a source cell migrates from a first donor node to a second donor node, sending beam information to the first donor node or the second donor node, where the beam information is used to determine a target beam to be used by the terminal in a target cell to which the terminal is handed over, the target beam is the same as a source beam used by the terminal in the source cell, the source cell is a cell served by a first DU of the relay node, the target cell is a cell served by a second DU of the relay node, and the first DU and the second DU respectively have F1 interfaces with the first donor node and the second donor node. In this manner, the beam used by the terminal in the target cell may be determined without performing beam measurement, to reduce signaling overheads and improve transmission efficiency.

In some embodiments, the beam information indicates at least one of the following: a beam used in the target cell in a same direction or index as the source beam used in the source cell; or a correspondence between the beam in the source cell and the beam in the target cell. In this way, using the target beam that is the same as the source beam may be effectively determined.

According to an eleventh aspect of the present disclosure, a communication device is provided. The communication device includes a processor and a memory that stores instructions. When the instructions are executed by the processor, a terminal device is enabled to perform the method according to any one of the first aspect to the tenth aspect and the implementations thereof.

According to a twelfth aspect of the present disclosure, a computer-readable storage medium is provided. The computer-readable storage medium stores instructions. When the instructions are executed by an electronic device, the electronic device is enabled to perform the method according to any one of the first aspect to the tenth aspect and the implementations thereof.

According to a thirteenth aspect of the present disclosure, a computer program product is provided. The computer program product includes instructions. When the instructions are executed by an electronic device, the electronic device is enabled to perform the method according to any one of the first aspect to the tenth aspect and the implementations thereof.

It should be understood that the content described in the summary is not intended to limit a key or important feature of the present disclosure, and is not intended to limit the scope of the present disclosure. The following descriptions facilitate understanding of other features of the present disclosure.

### BRIEF DESCRIPTION OF DRAWINGS

FIG. 1A is a diagram of a communication system in which an embodiment of the present disclosure may be implemented;
FIG. 1B is a diagram of a wireless relay scenario related to an embodiment of the present disclosure;
FIG. 1C is a diagram of an IAB network architecture related to an embodiment of the present disclosure;
FIG. 1D is a diagram of a user plane protocol stack of an IAB network related to an embodiment of the present disclosure;
FIG. 1E is a diagram of a control plane protocol stack of an IAB network related to an embodiment of the present disclosure;
FIG. 1F is a diagram of IAB node migration related to an embodiment of the present disclosure;
FIG. 1G is a diagram of partial migration related to an embodiment of the present disclosure;
FIG. 1H is a diagram of full migration that is of a gradual top-down (Gradual Top-down) type and that is related to an embodiment of the present disclosure;
FIG. 1I is a diagram of full migration that is of a gradual bottom-up (Gradual Bottom-up) type and that is related to an embodiment of the present disclosure;
FIG. 1J is a diagram of full migration that is of a full nested (Full Nested) type and that is related to an embodiment of the present disclosure;
FIG. 2 is a signaling interaction diagram of a terminal handover process in a measurement-free case according to some embodiments of the present disclosure;
FIG. 3 is a signaling interaction diagram of a terminal handover process in a measurement-free case according to some other embodiments of the present disclosure;
FIG. 4A and FIG. 4B show a first example process of a terminal handover in a measurement-free case according to an embodiment of the present disclosure;
FIG. 5A and FIG. 5B show a second example process of a terminal handover in a measurement-free case according to an embodiment of the present disclosure;
FIG. 6A to FIG. 6D show a third example process of a terminal handover in a measurement-free case according to an embodiment of the present disclosure;
FIG. 7A shows an open RAN (O-RAN) based IAB architecture that may be implemented according to an embodiment of the present disclosure;
FIG. 7B shows a fourth example process of a terminal handover in a measurement-free case according to an embodiment of the present disclosure;
FIG. 8 shows a migration process according to an embodiment of the present disclosure;
FIG. 9 is a schematic flowchart of a method implemented at a relay node according to an embodiment of the present disclosure;
FIG. 10 is a schematic flowchart of a method implemented at a first donor node according to some embodiments of the present disclosure;
FIG. 11 is a schematic flowchart of a method implemented at a first donor node according to some other embodiments of the present disclosure;
FIG. 12 is a schematic flowchart of a method implemented at a second donor node according to an embodiment of the present disclosure;
FIG. 13 is a signaling interaction diagram of a terminal handover process in a beam measurement-free case according to an embodiment of the present disclosure;
FIG. 14 shows an example process of a terminal handover in a beam measurement-free case according to an embodiment of the present disclosure;
   and
FIG. 15 is a block diagram of an example communication device that may be used to implement an embodiment of the present disclosure.

Throughout all the accompanying drawings, same or similar reference numerals represent same or similar components.

### DESCRIPTION OF EMBODIMENTS

The following describes embodiments of the present disclosure in more detail with reference to the accompanying drawings. Although some embodiments of the present disclosure are shown in the accompanying drawings, it should be understood that the present disclosure can be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples and are not intended to limit the protection scope of the present disclosure.

In the descriptions of embodiments of the present disclosure, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of the present disclosure may be implemented according to any appropriate communication protocol, including but not limited to cellular communication protocols such as 3rd generation (3rd Generation, 3G), 4th generation (4G), 5th generation (5G), and future (for example, a 6th generation (6G)) communication protocols, a wireless local area network communication protocol like the Institute of Electrical and Electronics Engineers (Institute of Electrical and Electronics Engineers, IEEE) 802.11, and/or any other protocol currently known or developed in the future.

The technical solutions of embodiments of the present disclosure are applied to a communication system that complies with any appropriate communication protocol, for example, a general packet radio service (General Packet Radio Service, GPRS), a global system for mobile communications (Global System for Mobile Communications, GSM), an enhanced data rate for GSM evolution (Enhanced Data rate for GSM Evolution, EDGE) system, a universal mobile telecommunications system (Universal Mobile Telecommunications Service, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronization code division multiple access (Time Division-Synchronization Code Division Multiple Access, TD-SCDMA) system, a frequency division duplex (Frequency Division Duplex, FDD) system, a time division duplex (Time Division Duplex, TDD) system, a 5th generation (5G) system (for example, new radio (New Radio, NR)), and a future communication system (for example, a 6th generation (6G) system).

For the purpose of description, the following describes embodiments of the present disclosure by using a 5G communication system in 3GPP as a background. However, it should be understood that embodiments of the present disclosure are not limited to the communication system, but may be applied to any communication system that has a similar problem, for example, a wireless local area network (WLAN), a wired communication system, or another communication system developed in the future.

The term "terminal" or "terminal device" used in the present disclosure refers to any terminal device that can perform wired or wireless communication with a network device or between terminal devices. The terminal device may be sometimes referred to as a user equipment (User Equipment, UE). The terminal device may be any type of mobile terminal, fixed terminal, or portable terminal. The terminal device may be any type of wireless communication device that has a wireless communication function. With emergence of an internet of things (Internet of Things, IOT) technology, more devices that previously have no communication function, for example without limitation to, a household appliance, a transportation tool, a tool device, a service device, and a service facility, start to obtain a wireless communication function by being configured with a wireless communication unit, so as to access a wireless communication network, and accept remote control. Such a device has the wireless communication function because the device is configured with the wireless communication unit, and therefore also belongs to a scope of wireless communication devices. In an example, the terminal device may include a mobile cellular phone, a cordless phone, a mobile terminal (Mobile Terminal, MT), a mobile station, a mobile device, a wireless terminal, a handheld device, a client, a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), a wireless data card, a wireless modulator demodulator (Modulator demodulator, Modem), a positioning device, a radio broadcast receiver, an e-book device, a game device, an internet of things (Internet of Things, IoT) device, a vehicle-mounted device, a flight vehicle, a virtual reality (Virtual Reality, VR) device, an augmented reality (Augmented Reality, AR) device, a wearable device (for example, a smart watch), a terminal device in a 5G network, any terminal device in an evolved public land mobile network (Public Land Mobile Network, PLMN), another device that may be used for communication, or any combination thereof. This is not limited in embodiments of the present disclosure.

The term "network node" or "network device" used in the present disclosure is an entity or a node that may be used to communicate with the terminal device, for example, may be an access network device. The access network device may be an apparatus that is deployed in a radio access network and that provides a wireless communication function for a mobile terminal. For example, the access network device may be a radio access network (Radio Access Network, RAN) network device. The access network device may include various types of base stations. The base station is configured to provide a wireless access service for the terminal device. Specifically, each base station corresponds to a service coverage area, and a terminal device entering the area may communicate with the base station by using a radio signal, to receive a wireless access service provided by the base station. Service coverage areas of the base stations may overlap, and a terminal device in an overlapping area may receive radio signals from a plurality of base stations. Therefore, the plurality of base stations may simultaneously provide services for the terminal device. Based on a size of the provided service coverage area, the access network device may include a macro base station for providing a macro cell (Macro cell), a micro base station for providing a micro cell (Pico cell), a pico base station for providing a pico cell, and a femto base station for providing a femto cell (Femto cell). In addition, the access network device may further include various forms of relay stations, access points, radio units (Radio Units, RRUs), remote radio units (Remote Radio Units, RRUs), radio heads (Radio Heads, RHs), remote radio heads (Remote Radio Heads, RRHs), and the like. In systems using different radio access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, and may be referred to as a gNodeB (gNB) or an NR NodeB (NR NB) in the 5G network. In some scenarios, the access network device may include a central unit (Central Unit, CU) and/or a distributed unit (Distributed Unit, DU). The CU and the DU may be deployed in different places. For example, the DU is remotely deployed in a high-traffic area, and the CU is deployed in a central equipment room. Alternatively, the CU and the DU may be deployed in a same equipment room. The CU and the DU may alternatively be different components in a same rack. In different systems, the CU (or a CU-control plane (control plane, CP) and a CU-user plane (user plane, UP)), the DU, or the RU may also have different names, but a person skilled in the art may understand meanings of the names. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module. For ease of description, in subsequent embodiments of the present disclosure, the foregoing apparatuses that provide the wireless communication function for the mobile terminal are collectively referred to as the network device. This is not specifically limited in embodiments of the present disclosure any more.

In some embodiments of the present disclosure, a "relay node", or referred to as an "IAB node", is a network device that can provide a wireless access service for the terminal. The relay node is connected to an IAB-donor (IAB-donor) device, that is, a donor node, through a wireless backhaul link, for transmission of service data of the terminal. The relay node includes a mobile termination (mobile termination, MT) part and a DU part. When facing a parent node of the relay node, the relay node may be used as a terminal device, that is, a role of the MT. When facing a child node (the child node may be another relay node or a common terminal) of the relay node, the relay node is considered as a network device, that is, a role of the DU.

In some embodiments of the present disclosure, the "donor node", or referred to as an "IAB donor", is an access network element that has functions of a complete network device, for example, a base station (gNB), and includes a CU and a DU. The donor node is connected to a core network device that provides a core network service, for example, connected to a 5G core network device. The core network device may correspond to different devices in different systems. For example, in 3G, the core network device may correspond to a serving general packet radio service (general packet radio service, GPRS) support node (serving GPRS support node, SGSN) and/or a gateway GPRS support node (gateway GPRS Support Node, GGSN). In 4G, the core network device may correspond to a mobility management entity (mobility management entity, MME) and/or a serving gateway (serving gateway, S-GW). In 5G, the core network device may correspond to an access and mobility management function (access and mobility management function, AMF), a session management function (session management function, SMF), or a user plane function (user plane function, UPF).

As mentioned above, in a communication system based on an integrated access and backhaul technology, there are still some problems that need to be resolved in aspects such as communication efficiency and a communication procedure. Embodiments of the present disclosure provide a technical solution for improving the aspects such as the communication efficiency and the communication procedure of the IAB communication system. The following further describes this application in detail with reference to the accompanying drawings. Specific operation methods, function descriptions, and the like in method embodiments may also be applied to apparatus embodiments or system embodiments.

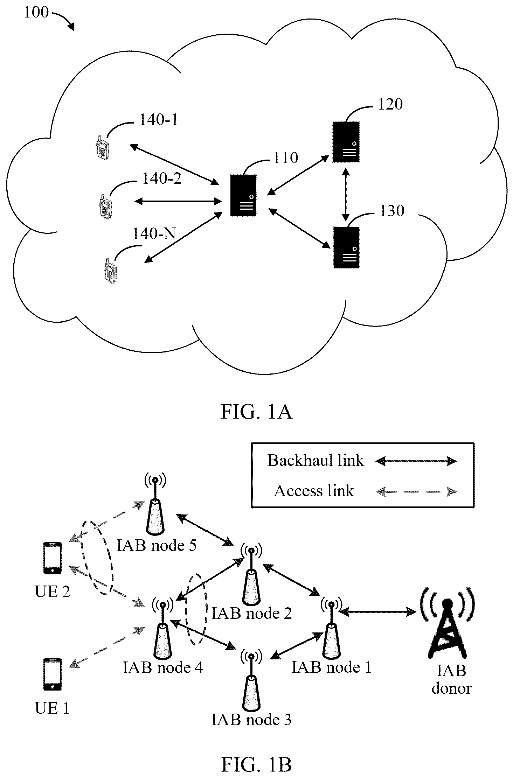

FIG. 1A is a diagram of a communication system 100 in which an embodiment of the present disclosure may be implemented. The communication system 100 may be a 3GPP-related cellular system, for example, a 4G or 5G mobile communication system, or a future-oriented evolved system (for example, a 6G mobile communication system). Alternatively, the communication system 100 may be an O-RAN system, a cloud radio access network (cloud radio access network, CRAN) system, or a wireless fidelity (wireless fidelity, Wi-Fi) system. Alternatively, the communication system 100 may be a communication system integrating the foregoing two or more systems. As shown in FIG. 1A, the system 100 may include a relay node 110, two donor nodes 120 and 130, and terminals 140-1 to 140-N (collectively referred to as a terminal 140).

The terminal 140 may have a wireless transceiver function, and can communicate (for example, perform wireless communication) with one or more network nodes in one or more communication systems, and receive a network service provided by the network node. The network node herein includes but is not limited to the network node shown in the figure. For example, the terminal 140 may be connected to the relay node 110 through an access link. The relay node 110 may communicate with the two donor nodes 120 and 130. For example, the relay node 110 may directly communicate with the two donor nodes 120 and 130 through a backhaul link. The backhaul link may be a wired backhaul link (for example, an optical fiber or a copper cable), or may be a wireless backhaul link (for example, a microwave). Alternatively or additionally, the relay node 110 may communicate with the two donor nodes 120 and 130 via one or more other relay nodes. The donor node 120 and the donor node 130 may communicate with each other directly or via another node.

In some deployments, the donor nodes 120 and 130 each may include a CU and a DU. The CU implements some functions of a network device, and the DU implements some other functions of the network device. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (media access control, MAC) layer, and a physical (physical, PHY) layer.

In some deployments, the relay node 110 may include a DU and a mobile termination MT. Functionality of the MT may be controlled and/or scheduled by a coupled donor node or the DU of the relay node 110.

In some embodiments, for example, as the relay node 110 moves, signal quality of a cell (also referred to as a source cell) that is served by the donor node 120 and that is accessed by the relay node 110 deteriorates. The relay node 110 may be handed over to a cell (also referred to as a target cell) served by the donor node 130. Correspondingly, the terminal 140 connected to the relay node 110 is also handed over to the target cell served by the donor node 130.

It should be understood that quantities of terminals and network nodes shown in FIG. 1A are merely used as examples. There may be more or fewer terminals and network nodes. This is not limited in the present disclosure.

In addition, it should be understood that the communication system 100 may be applicable to various scenarios. For example, the application scenario of the communication system 100 includes but is not limited to an existing communication system like a 5th generation (5G) system or a new radio (new radio, NR) communication system, a future evolved communication system, or the like. In addition, it should also be understood that the foregoing communication may comply with any appropriate communication technology and a corresponding communication standard.

FIG. 1B is a diagram of a wireless relay scenario related to an embodiment of the present disclosure. In an IAB network, one or more IAB nodes may be included on a transmission path between a UE and an IAB donor. Each IAB node needs to maintain a wireless backhaul link to a parent node and further needs to maintain a wireless link to a child node. If the child node of the IAB node is a terminal (for example, the UE), there is a wireless access link between the IAB node and the child node. If the child node of the IAB node is another IAB node, there is a wireless backhaul link between the IAB node and the child node. As shown in FIG. 1B, on a path "UE 1→IAB node 4→IAB node 3→IAB node 1→IAB donor", the UE 1 accesses the IAB node 4 through a wireless access link, the IAB node 4 is connected to the IAB node 3 through a wireless backhaul link, the IAB node 3 is connected to the IAB node 1 through a wireless backhaul link, and the IAB node 1 is connected to the IAB donor through a wireless backhaul link.

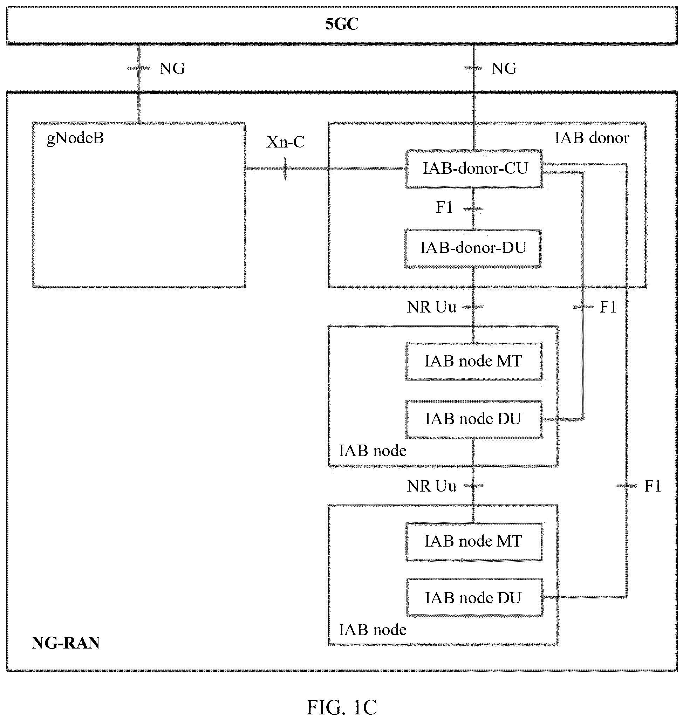

FIG. 1C is a diagram of an IAB network architecture related to an embodiment of the present disclosure. A DU of an IAB node (also denoted as an IAB node DU or an IAB-DU) is logically connected to a CU of an IAB donor (also referred to as an IAB-donor-CU or a donor CU for short) through an F1 interface. Actually, the connection between the IAB-DU and the donor CU is implemented through an NR Uu interface between an MT of each hop of IAB node (also referred to as an IAB node MT or an IAB-MT for short) and a parent node DU. However, because the IAB-DU can finally communicate with the donor CU, it may be considered that the F1 interface exists logically. The F1 interface supports a user plane protocol (F1-U) and a control plane protocol (F1-C). The user plane protocol includes one or more of the following protocol layers: a GPRS tunneling protocol user plane (General Packet Radio Service tunneling protocol user plane, GTP-U) protocol layer, a user datagram protocol (user datagram protocol, UDP) layer, an internet protocol (internet protocol, IP) layer, and the like. The control plane protocol includes one or more of the following protocol layers: an F1 application protocol (F1 application protocol, F1AP) layer, a stream control transport protocol (stream control transport protocol, SCTP) layer, an IP layer, and the like.

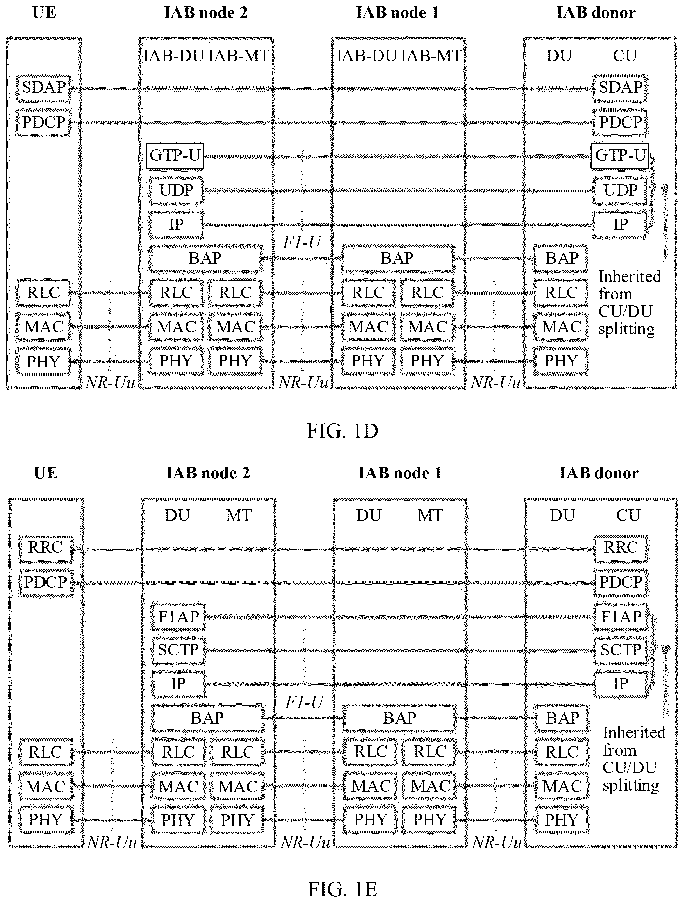

User plane and control plane protocol stacks in an IAB network related to embodiments of the present disclosure are shown in FIG. 1D and FIG. 1E. According to the F1-C, interface management, IAB-DU management, UE context related configuration, and the like may be performed between the IAB donor and the IAB node. According to the F1-U, functions such as user plane data transmission and downlink transmission status feedback may be performed between the IAB donor and the IAB node.

A new protocol layer, that is, a backhaul adaptation protocol (Backhaul Adaptation Protocol, BAP) layer, is introduced to a wireless backhaul link in the IAB network. The protocol layer is located above an RLC layer, and may be used to implement functions such as routing of a data packet on the wireless backhaul link and bearer mapping. It should be understood that, although BAPs in an IAB node 1 and an IAB node 2 each are shown as an entity in FIG. 1D and FIG. 1E, the present invention is not limited thereto. In another implementation, the BAP may alternatively be implemented as two separate entities. As shown in FIG. 1D and FIG. 1E, a start point and an end point of the BAP layer are located at an IAB-DU (accessed IAB-DU) connected to a UE and a DU of the IAB donor (also referred to as an IAB-donor-DU or a donor DU for short). The donor CU allocates a unique BAP address to each IAB node and the IAB-donor-DU that are controlled by the donor CU. In this way, each IAB node and the IAB-donor-DU in the network may be uniquely identified. When there are a plurality of paths, each BAP address may be associated with a plurality of path identifiers (IDs). Source nodes (an IAB-donor-DU in a downlink DL direction and an accessed IAB node in an uplink UL direction) add BAP headers to data packets of the source nodes at BAP layers of the source nodes. Content of the BAP header includes a 10-bit target BAP address (BAP address) and a 10-bit BAP path ID (BAP path ID), where the target BAP address and the BAP path ID are collectively referred to as a BAP routing ID (BAP routing ID), which has 20 bits in total. The BAP routing ID reflects an identifier of a target node and a path used to reach the target node. The donor CU configures a routing table for each IAB node, and content in the routing table is a mapping relationship between the BAP routing ID and a next-hop BAP address. The routing table may indicate a child node (if DL) or a parent node (if UL) to which the data packet should be forwarded. In addition to a routing function, the BAP protocol is further used to perform mapping between ingress and egress backhaul RLC channels, and a mapping rule is also configured by the donor CU. The essence thereof may be understood as finer-grained routing in which an RLC channel is further selected on a basis of determining the next-hop target BAP address (that is, determining a next-hop link).

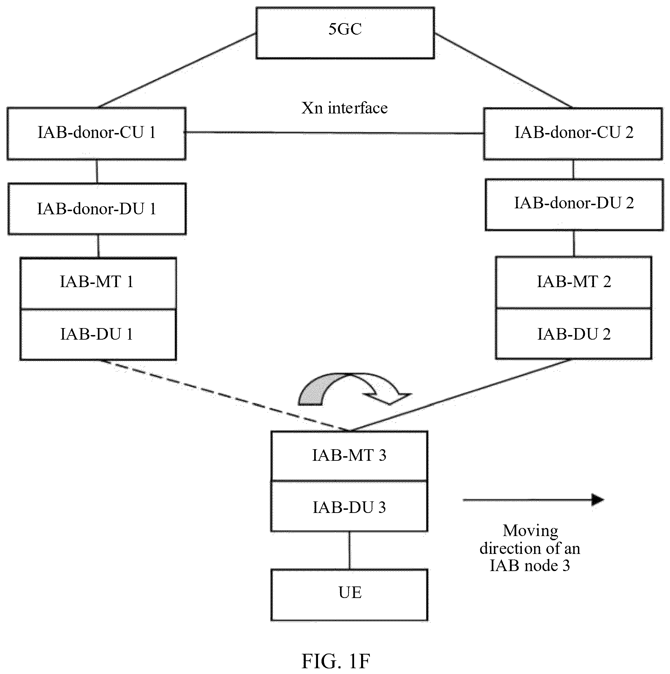

FIG. 1F is a diagram of IAB node migration related to an embodiment of the present disclosure. In an evolution direction of a release 18 (Rel-18) to be standardized, it has been agreed in the 3rd generation partnership project (3GPP) IAB standardization work that a mobile IAB scenario is considered in the Rel-18. As shown in FIG. 1F, an IAB-MT 3 initially accesses a cell served by an IAB-DU 1 controlled by an IAB-donor-CU 1. Because an IAB node 3 moves, signal quality of the cell served by the IAB-DU 1 deteriorates. Therefore, the IAB-MT 3 is handed over to a cell served by an IAB-DU 2 controlled by an IAB-donor-CU 2. This scenario is referred to as the IAB node migration. A migrating IAB node is referred to as a boundary node (boundary node).

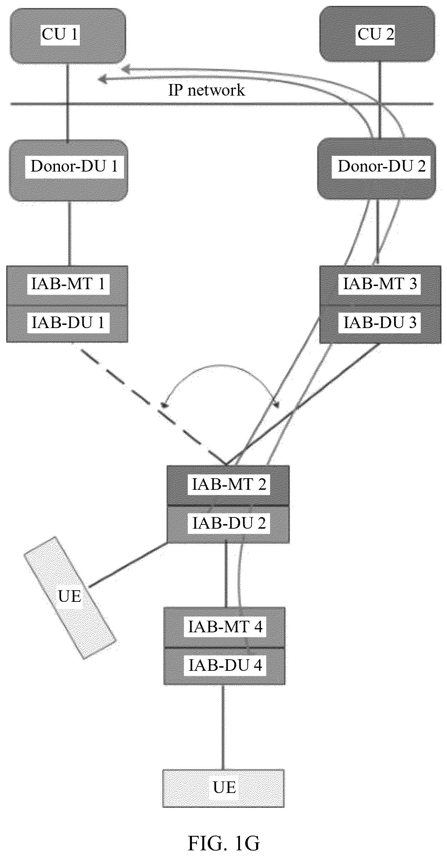

In discussion of a current release 17 (Rel-17), inter-CU IAB node migration is classified into two implementations: full migration (Full migration) and partial migration (Partial migration), where the full migration includes three implementations: gradual top-down, gradual bottom-up, and full nested. After the Rel-17 briefly provides the three implementations of the full migration, it is considered that these procedures are complex and cannot be completely discussed in the Rel-17. Therefore, in the Rel-17, a partial migration procedure is first discussed, and a signaling-level design is provided for implementing the partial migration. Based on understanding and consensus of the partial migration, content of the full migration continues to be discussed in the Rel-18. In the partial migration, an MT performs an inter-CU handover, but a DU still maintains an F1 connection to a source CU. In the full migration, the DU needs to set up an F1 connection to a target CU. The Rel-17 is mainly oriented to IAB node migration that uses load balancing as a starting point. Therefore, the partial migration may be used. Through the MT handover, an F1 interface is only switched to another path to be used for transmission, but an anchor of the F1 interface is not changed. The Rel-18 is mainly oriented to migration caused by IAB node movement. When the IAB node moves in a large range, it is inappropriate to still maintain the F1 connection to the source CU, and the anchor of the F1 connection needs to be changed to the target CU. Therefore, the full migration is a mandatory feature of Rel-18 mobile IAB. The following briefly describes a current discussion status of the partial migration and the full migration with reference to FIG. 1G to FIG. 1J.

FIG. 1G is a diagram of partial migration related to an embodiment of the present disclosure. As shown in FIG. 1G, before the partial migration, an RRC connection exists between an IAB-MT 2 and a CU 1, an F1 interface exists between an IAB-DU 2 and the CU 1, and an IAB node 2 communicates with an IAB donor through a source path (through an IAB node 1 including an IAB-MT 1 and an IAB-DU 1). During the partial migration, the IAB-MT 2 performs an inter-CU cell handover, and sets up an RRC connection to a CU 2. However, to avoid introducing an F1 interface re-setup process, the IAB-DU 2 still maintains the F1 interface with the CU 1, and does not set up an F1 interface with the CU 2. Therefore, a communication path between the CU 1 and the IAB-DU 2 changes to be cross-topology: CU 1↔donor DU 2↔IAB-MT 3↔IAB-DU 3↔IAB-MT 2↔IAB-DU 2. In FIG. 1G, the CU 1 and the CU 2 may be respectively referred to as an F1-terminating (F1-terminating) CU and a non-F1-terminating (non-F1-terminating) CU. It should be noted that, when transmission of data is performed on this path, the data does not pass through the CU 2, and the CU 1 directly communicates with the donor DU 2 via an IP network.

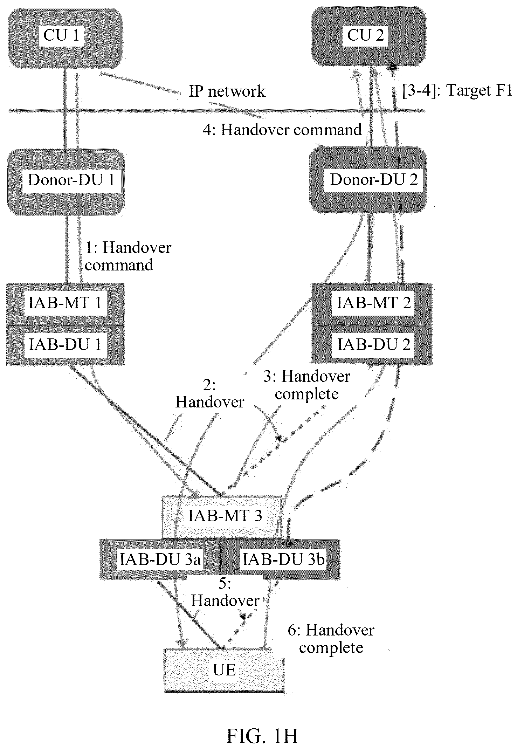

In the full migration related to embodiments of the present disclosure shown in FIG. 1H to FIG. 1J, an F1 interface between the IAB-DU 3 and the CU 1 needs to be migrated to the CU 2. The protocol does not support coexistence of F1 interfaces between one DU and two CUs. Therefore, the IAB-DU 3 may be extended to two logical DUs: an IAB-DU 3a and an IAB-DU 3b, to implement the migration. The IAB-DU 3a always maintains an F1 interface with the CU 1, and the IAB-DU 3b is configured to set up a new F1 interface with the CU 2. The DU 3a and the DU 3b may be considered as two DUs, and each has an F1 interface with a corresponding CU. A UE needs to be handed over from a cell served by the IAB-DU 3a to a cell served by the IAB-DU 3b. The following describes the three implementations of the full migration in detail.

FIG. 1H is a diagram of full migration that is of a gradual top-down type and that is related to an embodiment of the present disclosure. As shown in FIG. 1H, the first several steps of the gradual top-down are similar to the partial migration. First, based on a partial migration process, the MT 3 is handed over, and a cross-topology F1-C and F1-U between the DU 3a and the CU 1 are set up. When helping to set up the cross-topology F1-C and F1-U between the DU 3a and the CU 1, the CU 2 also sets up an F1-C and an F1-U between the DU 3b and the CU 2. Then, the UE is handed over to the DU 3b, and the UE may directly communicate with the CU 2 on a target path. Specifically, in step 1, the CU 1 sends a handover command to the MT 3 through a source path. In step 2, the MT 3 is handed over to the CU 2. In step 3, the MT 3 sends a handover complete indication to the CU 2 through a target path. Then, in step 4, the CU 1 sends a handover command to the UE on a target path. In step 5, the UE is handed over to the DU 3b. In step 6, the UE sends a handover complete indication to the CU 2 on the target path. As shown in FIG. 1H, between step 3 and step 4, that is, after the handover of the MT 3 is completed and before the handover command is sent to the UE, the DU 3b sets up an F1 interface with the CU 2. Step 4: sending the handover command to the UE, can be performed only after the DU 3b sets up the F1 interface with the CU 2 and receives a UE context configuration.

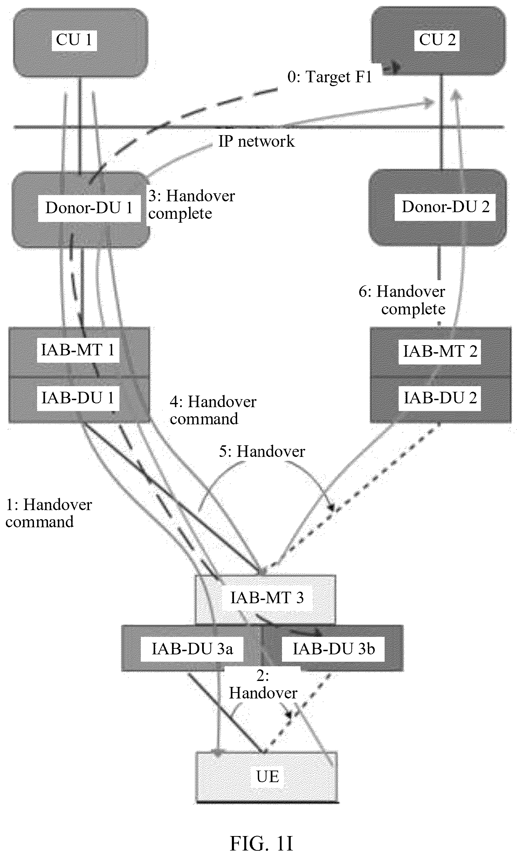

FIG. 1I is a diagram of full migration that is of a gradual bottom-up type and that is related to an embodiment of the present disclosure. As shown in FIG. 1I, in the gradual bottom-up, first, a cross-topology F1-C and F1-U between the DU 3b and the CU 2 are set up, so that the UE can be handed over to the DU 3b. The topology F1-C and F1-U between the DU 3b and the CU 2 on a source path are set up for data transmission. After all UEs are successfully handed over, a handover command or a handover command for making an MT effective is sent to the MT. Then, an F1-C/U is set up on a target path, so that traffic of the UE can be migrated to the target path. Specifically, in step 0, the DU 3b sets up an F1 interface on the source path between the DU 3b and the CU 2. In step 1, the CU 1 sends a handover command to the UE through a source path. In step 2, the UE initiates random access to the DU 3b. In step 3, the UE sends a handover complete indication to the CU 2 via a topology on a source path. In step 4, the CU 1 sends a handover command to the MT 3 through a source path. In step 5, the MT 3 is handed over to the CU 2. In step 6, the MT 3 sends a handover complete indication to the CU 2 through a target path.

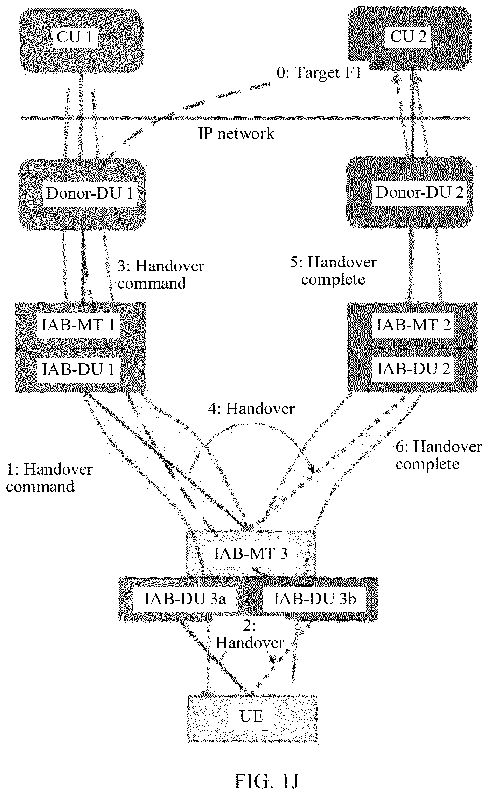

FIG. 1J is a diagram of full migration that is of a full nested type and that is related to an embodiment of the present disclosure. As shown in FIG. 1J, a full nested case is similar to a gradual bottom-up case. First, a cross-topology F1-C between the DU 3b and the CU 2 is set up (only the cross-topology F1-C is set up, and is used by the CU 2 to allow the UE to be handed over to the DU 3b when a handover decision is made, but a cross-topology F1-U is not set up for cross-topology data transmission), so that the UE can be allowed to be handed over to the DU 3b. After a handover command is sent to all UEs, a handover command or a handover command for making an MT effective is immediately sent to the MT. Then, an F1-C/U is directly set up on a target path, so that traffic of the UE can be migrated to the target path. Specifically, in step 0, the DU 3b sets up an F1 interface on a source path between the DU 3b and the CU 2. In step 1, the CU 1 sends a handover command to the UE through a source path. In step 2, the UE initiates random access to the DU 3b. In step 3, the CU 1 sends a handover command to the MT 3 through a source path. In step 4, the MT 3 is handed over to the CU 2. In step 5, the MT 3 sends a handover complete indication to the CU 2 through a target path. In step 6, the UE sends a handover complete indication to the CU 2 through a target path.

It may be considered that the IAB-DU 3b is not started to activate a cell until a full migration procedure. A cell activation process is that the DU 3b reports, to the CU 2 in an F1 setup request (F1 SETUP REQUEST), resource configurations and NR cell global identifiers (NR Cell Global Identifiers, NCGIs) to be used by all cells served by the DU 3b. The NCGI includes a gNB ID and a cell identifier cell ID, where the gNB ID is an ID of a CU, and the cell ID is preconfigured by an operations, administration and maintenance (Operations, Administration and Maintenance, OAM) system or a network management system for the IAB-DU 3 (that is, the IAB-DU 3 knows cell IDs to be used by cells served by a DU 3b if the DU 3b needs to be started). When the DU 3b is to set up the F1 interface with the CU 2, the DU 3b knows a gNB ID of the CU 2. Therefore, an NCGI of each cell may be obtained by combining the gNB ID of the CU 2 with the preconfigured cell ID. After receiving the F1 setup request, the CU 2 selects some of the cells for activation, and includes NCGIs of the activated cells in an F1 setup response (F1 SETUP RESPONSE). After receiving the F1 setup response, the DU 3b activates the corresponding cells, and another cell that is not indicated to be activated is in an inactive state. In conclusion, the DU 3b performs cell activation in a process of setting up the F1 interface with the CU 2. After that, the UE may measure a signal of the cell served by the DU 3b, and the network may hand over the UE to the DU 3b.

It can be learned that, in the handover that is of the UE from the cell served by the DU 3a to the cell served by the DU 3b and that is caused by the migration of the IAB node from the CU 1 to the CU 2, the UE needs to perform neighboring cell measurement and perform measurement reporting. The CU 1 selects a target cell served by the DU 3b based on a measurement report of the UE, and initiates a handover request to the CU 2.

Because reference signal received power RSRP within a period of time needs to be obtained for the neighboring cell measurement, time is long. In addition, the MT handover originally takes time. Consequently, an entire full migration procedure is slow, and service interruption time of the UE is long, affecting user experience. In addition, the full migration occurs because the MT needs to be handed over, and signal quality between the UE and the DU 3a does not deteriorate. In this case, impact of the migration of the IAB node on the UE needs to be reduced as much as possible. In other words, the long service interruption time of the UE is not caused by the UE itself, and the foregoing handover procedure is not friendly to the UE. Therefore, an effective handover manner is needed.

In view of the foregoing analysis and research, embodiments of the present disclosure provide a communication method. In the method, when a relay node serving a terminal via a source cell migrates from a first donor node to a second donor node, the relay node sends information to the first donor node or the second donor node. The information indicates a target cell to which the terminal is to be handed over. The source cell is a cell served by a first distributed unit DU of the relay node, the target cell is a cell served by a second DU of the relay node, and the first DU and the second DU respectively have F1 interfaces with the first donor node and the second donor node. The relay node receives handover information from the first donor node, where the handover information indicates the terminal to hand over to the target cell. Then, the relay node sends the handover information to the terminal via the source cell.

In this manner, without using a measurement report of the terminal, the donor node may directly learn, from the information received by the relay node, of the target cell to which the terminal is to be handed over. In this way, signaling overheads are reduced, migration execution time is shortened, and communication efficiency is improved.

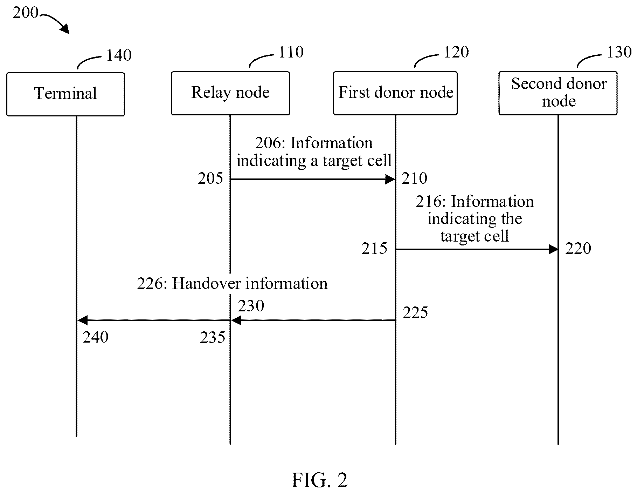

FIG. 2 is a signaling interaction diagram of a terminal handover process 200 in a measurement-free case according to some embodiments of the present disclosure. For clarity of discussion without any limitation, the process 200 is discussed with reference to FIG. 1A.

In the process 200, when a relay node 110 serving a terminal 140 via a source cell migrates from a first donor node 120 to a second donor node 130, the relay node 110 sends (205) information 206 to the first donor node 120. Correspondingly, the first donor node 120 receives (210) the information 206 from the relay node 110. The information 206 indicates a target cell to which the terminal 140 is to be handed over. The source cell is a cell served by a first DU of the relay node 110, and the target cell is a cell served by a second DU of the relay node 110. The first DU and the second DU respectively have F1 interfaces with the first donor node 120 and the second donor node 130. It should be understood that the first DU and the second DU of the relay node 110 may be logical DUs. The source cell served by the first DU and the target cell served by the second DU are isolated from each other, that is, are configured with mutually isolated resources.

In some embodiments, the information 206 may include a correspondence between the target cell and the terminal 140. For example, the information 206 may include a correspondence between an identifier of the target cell and an identifier of the terminal 140. For example, the identifier of the terminal 140 may include a cell radio network temporary identifier C-RNTI. Alternatively or additionally, the information 206 may include a correspondence between the target cell and the source cell. In some other embodiments, the information 206 may include a correspondence between an identifier of the target cell and an identifier of the source cell. It should be understood that, although in some examples, the second DU may not be started at this time, a cell identifier of a cell served by the second DU is preconfigured by an OAM. Therefore, the relay node 110 may know the cell identifier to be used by the cell served by the second DU after the second DU is started.

In some embodiments, when a CU of the first donor node 120 sends a handover request used for an MT of the relay node 110 to a CU of the second donor node 130 earlier than an interface is set up between the second DU of the relay node 110 and the CU of the second donor node 130, the first DU or the MT of the relay node 110 may send the information 206 to the CU of the first donor node 120.

For example, the first DU of the relay node 110 may send the information 206 via an F1AP message. Alternatively or additionally, the MT of the relay node 110 may send the information via an RRC message. In an example, the information 206 may be included in a measurement report of the MT.

As shown in FIG. 2, the first donor node 120 sends (215) information 216 to the second donor node 130. The information 216 indicates the target cell to which the terminal 140 is to be handed over. Correspondingly, the second donor node 130 receives (220) the information 216 from the first donor node 120.

In some embodiments, the first donor node 120 may send, to the second donor node 130, a handover request used for at least one of the following two: the handover of the terminal 140, and a handover of the MT of the relay node 110 from the CU of the first donor node 120 to the CU of the second donor node 130. Correspondingly, the second donor node 130 may receive the handover request from the first donor node 120. For example, the information 216 may be included in the handover request. In an example, the first donor node 120 may indicate the target cell by including the identifier of the target cell and an identifier of the second donor node 130: NCGIs, in the handover request. In another example, the first donor node 120 may indicate the target cell by including another type of identification information, for example, a cell identifier (cell ID) or a physical cell identifier (PCI), in the handover request. In this way, the second donor node 130 may learn of the target cell to which the terminal 140 is to be handed over.

In three types of full migration procedures, in gradual bottom-up, the CU of the second donor node 130 needs to set up a cross-topology F1-U service with the second DU as an intermediate state on a source path associated with the first donor node 120, and then migrates the F1-U service to a target path associated with the second donor node 130. In other two types of full migration procedures, the CU of the second donor node 130 directly sets up the F1-U service on the source path. Therefore, in some embodiments, to support the foregoing three types of full migration procedures, the handover request may further include an indication indicating whether the second donor node 130 needs to send a user plane service of the terminal 140 through the path associated with the first donor node 120. Because the F1-U service is related to the terminal 140, whether the UE service needs to be set up on the source path may be indicated when UE context information is sent.

After receiving the handover request, the second donor node 130 may perform an admission decision on the MT of the relay node 110 and the terminal 140, and may return a handover response about the MT and the terminal 140 to the first donor node 120. Handover requests of the terminal 140 and the MT are combined for sending. In comparison with separate sending, this helps the second donor node 130 better perform the admission decision. Then, when selecting a target cell for the MT, the second donor node 130 may consider load of a terminal served by the target cell. Correspondingly, the first donor node 120 may receive the handover response, to continue the handover procedure.

In some embodiments, after sending the information 206 to the CU of the first donor node 120, the relay node 110 may start the second DU. For example, the relay node 110 may configure a resource of the target cell to correspond to a resource of the source cell. In an example, the relay node 110 may configure a beam direction and/or a time domain resource of the target cell to be the same as a beam direction and/or a time domain resource of the source cell, and configure a frequency domain resource of the target cell not to overlap a frequency domain resource of the source cell. Alternatively, the relay node 110 may configure the resource of the target cell to correspond to the resource of the source cell. It should be understood that this is merely an example. The relay node 110 may configure the resource of the target cell to correspond to the resource of the source cell in any other manner based on practice. Embodiments of the present disclosure are not limited thereto. The resource of the cell served by the first DU is configured to correspond to that of the cell served by the second DU, so that parameters such as signal quality and data rates of the terminal 140 in the cells served by the first DU and the second DU are close, to support directly handing over the terminal 140 to the target cell corresponding to the second DU without waiting for measurement and reporting processes of the terminal 140.

In some embodiments, resource configuration may be performed on a node between the second DU and the CU of the second donor node 130. The resource configuration herein includes a resource used for transmission of an F1-C and a resource used for transmission of an F1-U. For example, based on the handover request indicating that the second donor node 130 needs to send the user plane service of the terminal 140 through the path associated with the first donor node 120, the second donor node 130 may send, to the first donor node 120, a request for setting up the path. Then, the first donor node 120 may set up the path in response to the request, for the second donor node 130 to transmit a part of the user plane service of the terminal 140.

In some embodiments, the relay node 110 may send an interface setup request message to the second donor node. For example, the second DU of the relay node 130 may initiate an F1 setup request message to the CU of the second donor node 130, to request to set up the F1-C. The F1 setup request message may carry, for example, NCGIs of all cells. Then, the CU of the second donor node 130 may determine, based on the target cell obtained from the information 216, a cell to be activated by the second DU. Then, the CU of the second donor node 130 may send an interface setup response message to the second DU of the relay node 110. The interface setup response message may indicate the to-be-activated cell to the second DU. Correspondingly, the relay node 110 may receive the interface setup response message from the second donor node, and then determine the to-be-activated cell.

In some embodiments, after activating the corresponding target cell served by the second DU, the relay node 110 may send, to the CU of the first donor node 120, an indication indicating that the second DU is ready to provide a service for the terminal 140. For example, the first DU of the relay node 110 may send the indication to the CU of the first donor node 120. In another example, the MT of the relay node 110 may send the indication to the CU of the first donor node 120.

As shown in FIG. 2, the first donor node 120 sends (225), to the relay node 110, handover information 226 indicating the terminal 140 to be handed over to the target cell. Correspondingly, the relay node 110 receives (230) the handover information 226 from the first donor node 120, and sends (235) the handover information 226 to the terminal 140 via the source cell. Correspondingly, the terminal 140 receives (240) the handover message 226 from the relay node 110 and then performs the handover.

In this manner, the relay node indicates, to the first donor node, the target cell to which the terminal is to be handed over, so that the first donor node can directly learn of a target cell of each UE without waiting for measurement and reporting of each terminal. Therefore, waiting time for neighboring cell measurement and measurement reporting of the terminal is avoided, and execution time of the full migration and service interruption time of the terminal are reduced. In addition, the handover requests of the terminal and the MT are combined for sending. In comparison with the separate sending, this helps the second donor node better perform the admission decision, so that when selecting the target cell for the MT, the second donor node can consider the load of the terminal served by the target cell.

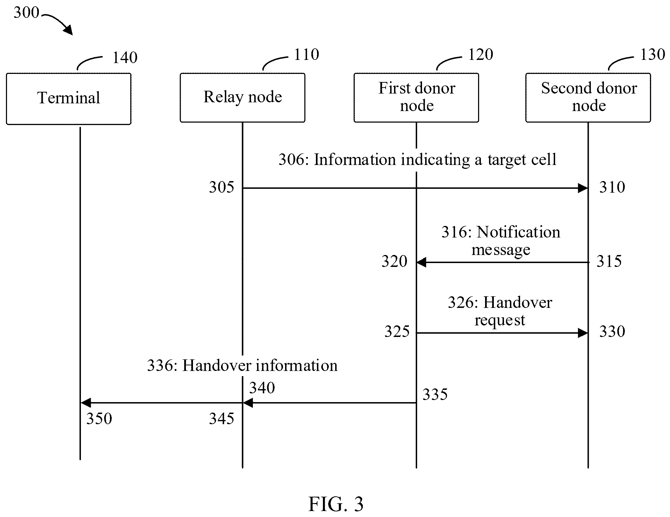

FIG. 3 is a signaling interaction diagram of a terminal handover process 300 in a measurement-free case according to some other embodiments of the present disclosure. For clarity of discussion without any limitation, the process 300 is discussed with reference to FIG. 1A.

In the process 300, when a relay node 110 serving a terminal 140 via a source cell migrates from a first donor node 120 to a second donor node 130, the relay node 110 sends (305) information 306 to the second donor node 130. Correspondingly, the second donor node 130 receives (310) the information 306 from the relay node 110. The information 306 indicates a target cell to which the terminal 140 is to be handed over. The source cell is a cell served by a first DU of the relay node 110, and the target cell is a cell served by a second DU of the relay node 110. The first DU and the second DU respectively have F1 interfaces with the first donor node 120 and the second donor node 130. It should be understood that the first DU and the second DU of the relay node 110 may be logical DUs. The source cell served by the first DU and the target cell served by the second DU are isolated from each other, that is, are configured with mutually isolated resources.

In some embodiments, the information 306 may include a correspondence between the target cell and the terminal 140. For example, the information 306 may include a correspondence between an identifier of the target cell and an identifier of the terminal 140. For example, the identifier of the terminal 140 may include a cell radio network temporary identifier C-RNTI. In an example, the information 306 may include a correspondence between the identifier of the terminal 140 and an NCGI of the target cell.

In some embodiments, when an interface is set up between the second DU of the relay node 110 and a CU of the second donor node 130 earlier than a CU of the first donor node 120 sends a handover request used for an MT of the relay node 110 to the CU of the second donor node 130, the second DU of the relay node 110 may send the information 306 to the CU of the second donor node 130. In this embodiment, before sending the information 306 to the CU of the second donor node 130, the relay node 110 may start the second DU. For example, the relay node 110 may configure a resource of the target cell to correspond to a resource of the source cell. In an example, the relay node 110 may configure a beam direction and/or a time domain resource of the target cell to be the same as a beam direction and/or a time domain resource of the source cell, and configure a frequency domain resource of the target cell not to overlap a frequency domain resource of the source cell. Alternatively, the relay node 110 may configure the resource of the target cell to correspond to the resource of the source cell. It should be understood that this is merely an example. The relay node 110 may configure the resource of the target cell to correspond to the resource of the source cell in any other manner based on practice. Embodiments of the present disclosure are not limited thereto. The resource of the cell served by the first DU is configured to correspond to that of the cell served by the second DU, so that parameters such as signal quality and data rates of the terminal 140 in the cells served by the first DU and the second DU are close, to support directly handing over the terminal 140 to the target cell corresponding to the second DU without waiting for measurement and reporting processes of the terminal 140.

In some embodiments, the information 306 may be sent via an interface setup request message. For example, the second DU of the relay node 130 may initiate an F1 setup request message to the CU of the second donor node 130, to request to set up an F1-C. Then, the CU of the second donor node 130 may determine, based on the target cell obtained from the information 306, a cell to be activated by the second DU. Then, the CU of the second donor node 130 may send an interface setup response message to the second DU of the relay node 110. The interface setup response message may indicate the to-be-activated cell to the second DU. Correspondingly, the relay node 110 may receive the interface setup response message from the second donor node, and then determine the to-be-activated cell. Then, the relay node 110 may activate the corresponding cell.

As shown in FIG. 3, the first donor node 120 sends (315), to the second donor node 130, a notification message 316 related to the target cell to which the terminal 140 is to be handed over. Correspondingly, the second donor node 130 receives (320) the notification message 316 from the first donor node 120. In some embodiments, the first donor node 120 may send the notification message 316 to the second donor node 130 via an interface message (for example, an XN interface message or an NG interface message). For example, the notification message 316 may indicate that identification information indicating the target cell is default or invalid in a handover request 326 used for the handover. In another example, the notification message 316 may indicate the target cell, so that the second donor node 130 correctly fills in the target cell when sending the handover request 326.

Then, the first donor node 120 sends (325), to the second donor node 130 based on the notification message 316, the handover request 326 used for the handover of the terminal 140. Correspondingly, the second donor node 130 receives (330) the handover request 326 from the first donor node 120. In some embodiments, the handover request 326 may be carried in the handover request used for the MT of the relay node 130.

For example, if determining that the notification message 316 indicates that the identification information is default or invalid in the handover request 326, the first donor node 120 may send, to the second donor node 130, the handover request 326 in which the identification information is default or invalid. In this case, the second donor node 130 may then perform a handover decision based on the target cell that is of the terminal 140 and that is obtained from the information 306.

In another example, if determining that the notification message indicates the target cell, the first donor node 120 may send, to the second donor node 130, the handover request 326 indicating the target cell. For example, the handover request 326 may include the NCGI of the target cell. In this case, the second donor node 130 may then perform a handover decision based on the target cell that is of the terminal 140 and that is obtained from the handover request 326.

In three types of full migration procedures, in gradual bottom-up, the CU of the second donor node 130 needs to set up a cross-topology F1-U service with the second DU as an intermediate state on a source path associated with the first donor node 120, and then migrates the F1-U service to a target path associated with the second donor node 130. In other two types of full migration procedures, the CU of the second donor node 130 directly sets up the F1-U service on the source path. Therefore, in some embodiments, to support the foregoing three types of full migration procedures, the handover request 326 may further include an indication indicating whether the second donor node 130 needs to send a user plane service of the terminal 140 through the path associated with the first donor node 120.

In some embodiments, resource configuration may be performed on a node between the second DU and the CU of the second donor node 130. The resource configuration herein includes a resource used for transmission of the F1-C and a resource used for transmission of an F1-U. For example, based on the handover request indicating that the second donor node 130 needs to send the user plane service of the terminal 140 through the path associated with the first donor node 120, the second donor node 130 may send, to the first donor node 120, a request for setting up the path. Then, the first donor node 120 may set up the path in response to the request, for the second donor node 130 to transmit a part of the user plane service of the terminal 140.

In some embodiments, after activating the corresponding target cell served by the second DU, the relay node 110 may send, to the CU of the first donor node 120, an indication indicating that the second DU is ready to provide a service for the terminal 140. For example, the first DU of the relay node 110 may send the indication to the CU of the first donor node 120. In another example, the MT of the relay node 110 may send the indication to the CU of the first donor node 120.

As shown in FIG. 3, the first donor node 120 sends (335), to the relay node 110, handover information 336 indicating the terminal 140 to be handed over to the target cell. Correspondingly, the relay node 110 receives (340) the handover information 336 from the first donor node 120, and sends (345) the handover information 336 to the terminal 140 via the source cell. Correspondingly, the terminal 140 receives (350) the handover message 336 from the relay node 110 and then performs the handover.

In this manner, the relay node indicates, to the second donor node, the target cell to which the terminal is to be handed over, so that the second donor node does not need to obtain the target cell via the handover request from the first donor node. Therefore, the first donor node does not need to select a target cell based on a measurement report of the terminal, to avoid waiting for measurement and reporting processes of the terminal. Therefore, waiting time for neighboring cell measurement and measurement reporting of the terminal is avoided, and execution time of the full migration and service interruption time of the terminal are reduced.

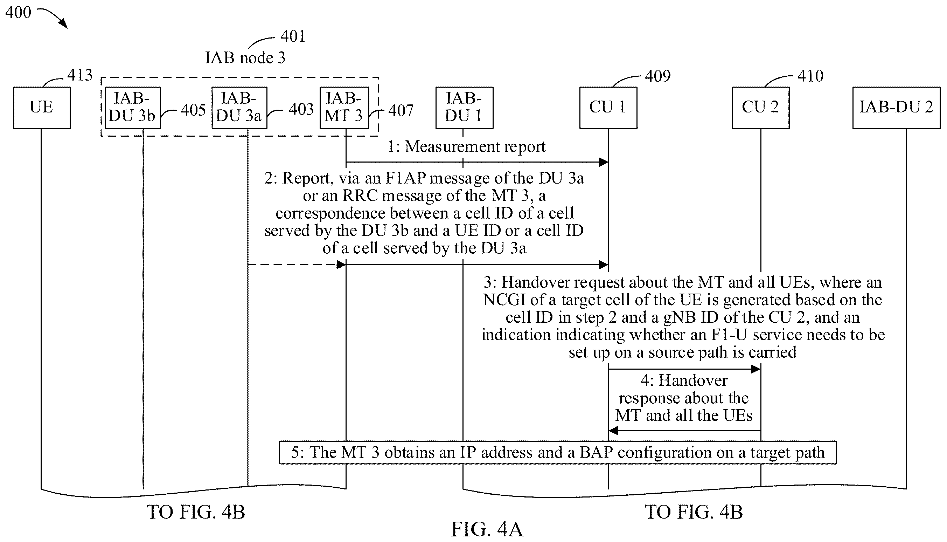

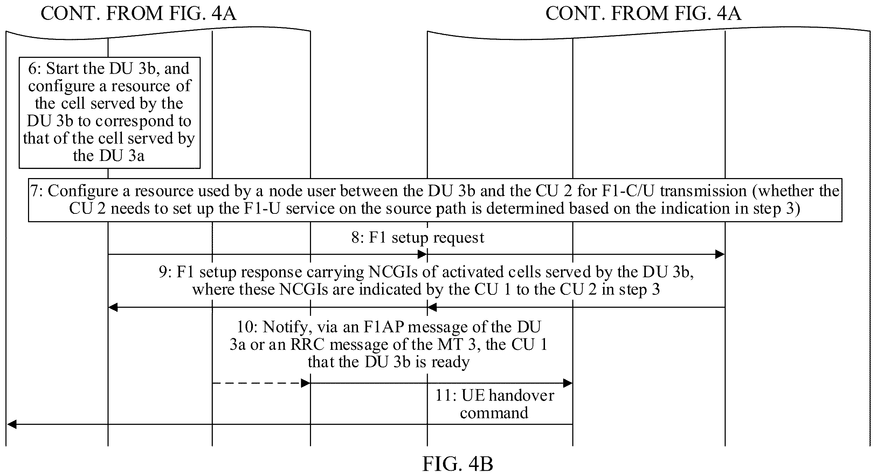

FIG. 4A and FIG. 4B show a first example process 400 of a terminal handover in a measurement-free case according to an embodiment of the present disclosure. The process 400 may be considered as a specific implementation of the terminal handover process in FIG. 2. For clarity of discussion without any limitation, the process 400 is discussed with reference to FIG. 1A. In this embodiment, a relay node 110 is implemented as an IAB node 3 401, a first DU of the relay node 110 is implemented as a DU 3a 403, a second DU of the relay node 110 is implemented as a DU 3b 405, an MT of the relay node 110 is implemented as an MT 3 407, a CU of a first donor node 120 is implemented as a CU 1 409, a CU of a second donor node 130 is implemented as a CU 2 411, and a terminal 140 is implemented as a UE 413.

As shown in FIG. 4A and FIG. 4B, in step 1, the MT 3 407 sends a measurement report to the CU 1 409. The CU 1 409 determines, based on the measurement report of the MT 3 407, that the MT 3 407 needs to be handed over.

Then, in step 2, a correspondence between a cell ID of a cell served by the DU 3b 405 and a UE ID or a cell ID of a cell served by the DU 3a 403 is reported via an F1AP message of the DU 3a 403 or an RRC message of the MT 3 407. The UE ID may include a C-RNTI. If the RRC message of the MT 3 407 is used in this step, step 2 may alternatively be carried in the measurement report of the MT in step 1. Step 2 enables the CU 1 409 to directly or indirectly obtain a target cell ID of each UE.

In step, the CU 1 409 sends a handover request message about the MT 3 407 and all UEs to the CU 2 411, where the handover request message carries an NCGI of a target cell of the UE. The NCGI is generated by using the target cell ID obtained by the CU 1 409 in step 2 and a gNB ID of the CU 2 411.

In addition, in three types of full migration procedures, in gradual bottom-up, the CU 2 411 needs to set up a cross-topology F1-U service with the DU 3b 405 as an intermediate state on a source path, and then migrates the F1-U service to a target path. In other two types of procedures, the CU 2 411 directly sets up the F1-U service on the target path. Therefore, in step 3, whether the CU 2 411 needs to set up the F1-U service on the source path may be further indicated. In other words, because the F1-U service is related to the UE, whether the UE service needs to be set up on the source path may be indicated when UE context information is sent.

In step 4, the CU 2 411 performs an admission decision on the MT and all the UEs, and returns a handover response message about the MT and all the UEs to the CU 1 409. In step 5, the MT 3 407 obtains an IP address and a BAP configuration on the target path.

In step 6, the DU 3b 405 is started, and a resource of the cell served by the DU 3b 405 is configured to correspond to that of the cell served by the DU 3a 403. For example, the resource configuration of the cell served by the DU 3b 405 and the cell served by the DU 3a 403 may be that beam directions and/or slot configurations are the same, and the cells are staggered by using frequencies. The resource of the cell served by the DU 3b 405 is configured to correspond to that of the cell served by the DU 3a 403, so that parameters such as signal quality and data rates of the UE 413 in the cells served by the DU 3a 403 and the DU 3b 405 are close, to directly hand over the UE 413 to the cell corresponding to the DU 3b 405 without waiting for measurement and reporting processes of the UE 413.

In step 7, resource configuration is completed on a node between the DU 3b 405 and the CU 2 411. The resource configuration herein includes a resource used for transmission of an F1-C and a resource used for transmission of an F1-U. Whether the CU 2 411 needs to set up the F1-U service on the source path is determined based on the indication in step 3.

In step 8, the DU 3b 405 initiates an F1 setup request message to the CU 2 411, to request to set up the F1-C, where the F1 setup request message carries NCGIs of all cells. In step 9, the CU 2 411 indicates, in an F1 setup response message based on the NCGI that is of the target cell of the UE 413 and that is obtained in step 3, the DU 3b 405 to activate the target cell of the UE 413.

In step 10, the IAB node 3 401 notifies, via an F1AP message of the DU 3a 403 or an RRC message of the MT 3 407, the CU 1 409 that the DU 3b 405 is ready. In step 11, the CU 1 409 delivers a handover command to the UE 413.

In this way, without waiting for measurement and reporting of each UE, the CU 1 409 directly selects a target cell for the UE 413 based on a correspondence between new and old cells served by the DU 3b 405 and the DU 3a 403. This reduces execution time of the full migration and service interruption time of the UE. In addition, handover requests of the UE 413 and the MT 3 407 are combined for sending. In comparison with separate sending, this helps the CU 2 411 better perform the admission decision. In this way, when selecting a target cell for the MT 3 407, the CU 2 411 is allowed to consider load of a UE served by the target cell.

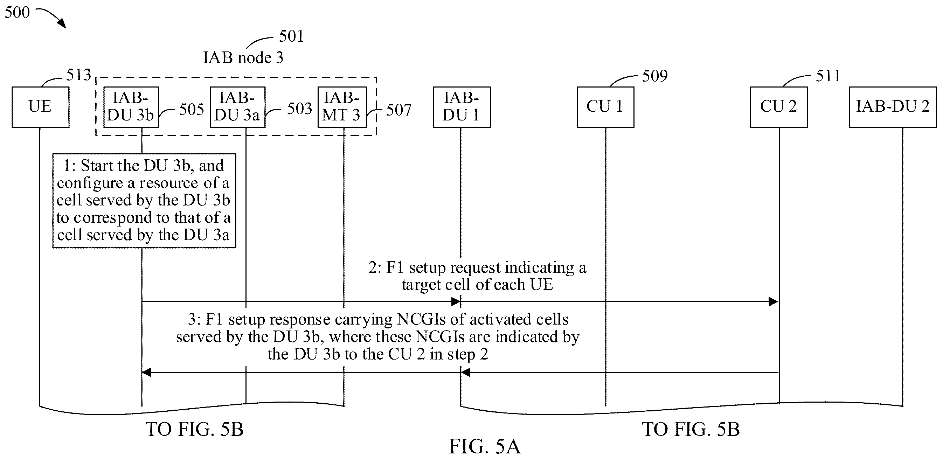

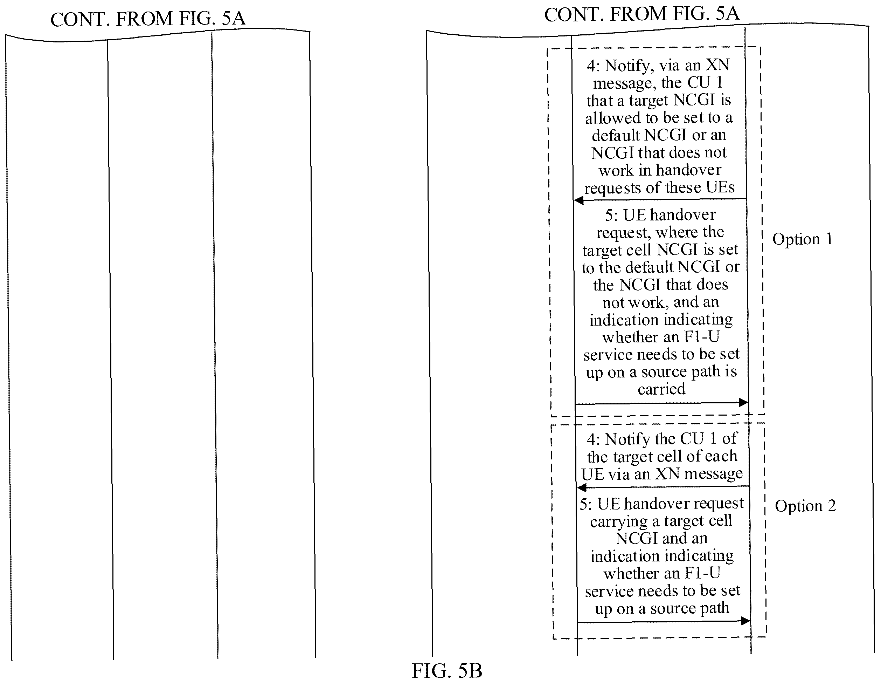

FIG. 5A and FIG. 5B show a second example process 500 of a terminal handover in a measurement-free case according to an embodiment of the present disclosure. The process 500 may be considered as a specific implementation of the terminal handover process in FIG. 3. For clarity of discussion without any limitation, the process 500 is discussed with reference to FIG. 1A. In this embodiment, a relay node 110 is implemented as an IAB node 3 501, a first DU of the relay node 110 is implemented as a DU 3a 503, a second DU of the relay node 110 is implemented as a DU 3b 505, an MT of the relay node 110 is implemented as an MT 3 507, a CU of a first donor node 120 is implemented as a CU 1 509, a CU of a second donor node 130 is implemented as a CU 2 511, and a terminal 140 is implemented as a UE 513.

As shown in FIG. 5A and FIG. 5B, in step 1, the DU 3b 505 is started, and a resource of a cell served by the DU 3b 505 is configured to correspond to that of a cell served by the DU 3a. For example, beam directions and/or slot configurations are the same, and the cells are staggered by using frequencies.

In step 2, the DU 3b 505 initiates an F1 setup request message to the CU 2 511, to request to set up an F1-C. The F1 setup request message carries NCGIs of all cells, and indicates a target cell of each UE. For example, a correspondence between an identifier of the UE and the NCGI may be indicated.

In step 3, the CU 2 511 indicates, in an F1 setup response message based on the target cell that is of each UE and that is obtained in step 2, the DU 3b 505 to activate a corresponding cell. Then, an option 1 or an option 2 may be performed.

In the option 1, in step 4, the CU 1 509 notifies, via an interface message (for example, an XN message), the CU 1 509 that a target NCGI is allowed to be set to a default NCGI or an NCGI that does not work in handover requests of these UEs. Then, in step 5, the CU 1 509 initiates the handover request (which may be carried in a handover request used for the MT, or may be sent separately) about the UE to the CU 2 511, where the target cell NCGI is default or does not work. The CU 2 511 directly performs a handover decision based on the target cell received in step 2. In addition, the handover request may further carry an indication indicating whether an F1-U needs to be set up on a source path.

In the option 2, in step 4, the CU 2 511 notifies the CU 1 509 of the target cell of each UE via an interface message (for example, an XN message), so that the CU 1 509 correctly fills in the target cell when sending a UE handover request. Then, in step 5, the CU 1 509 initiates the handover request (which may be carried in a handover request used for the MT, or may be sent separately) about the UE to the CU 2 511, where the handover request carries a target cell NCGI. In addition, the handover request may further carry an indication indicating whether an F1-U needs to be set up on a source path.

In this way, the CU 1 509 does not need to select the target cell by using a measurement report of the UE or notifies the CU 2 511. Instead, after determining the target cell for the UE 513, the boundary node 501 reports the target cell to the CU 2 511. This avoids a measurement process of the UE, and reduces execution time of full migration and service interruption time of the UE.

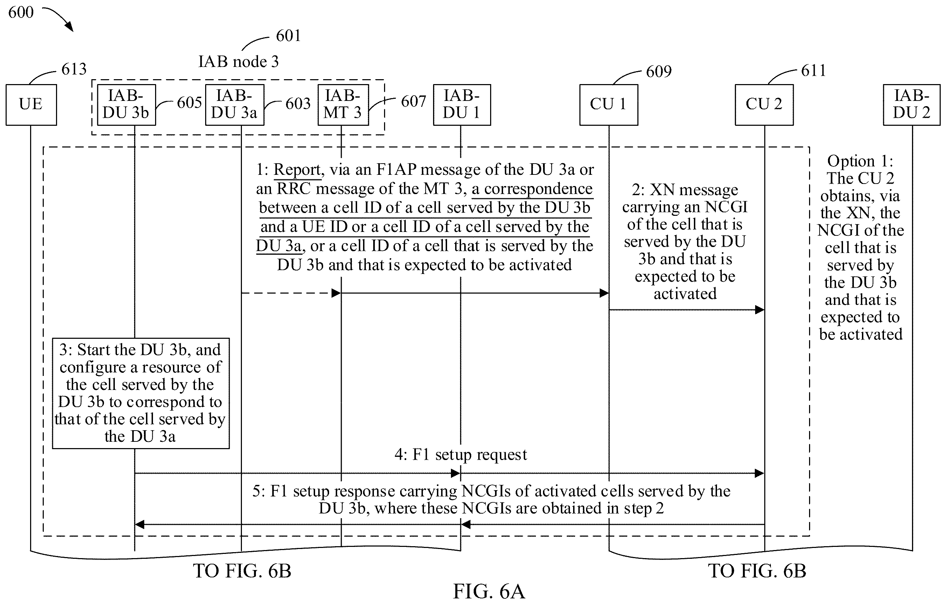

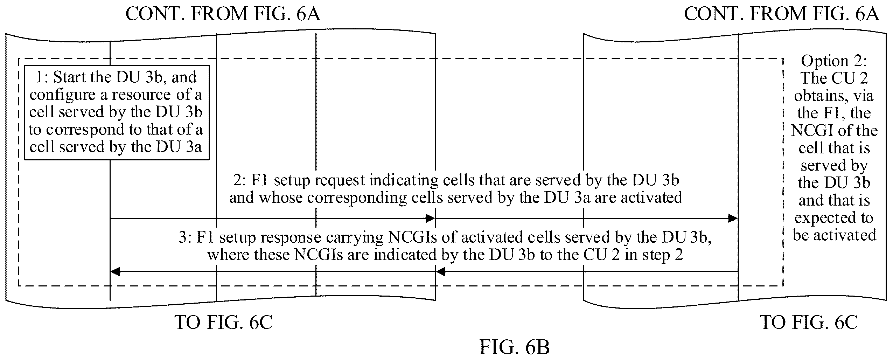

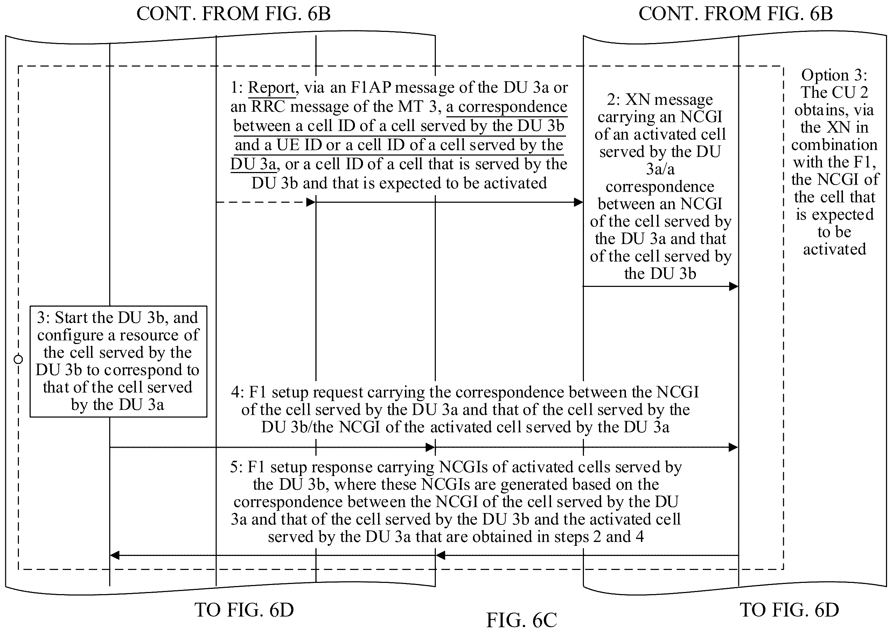

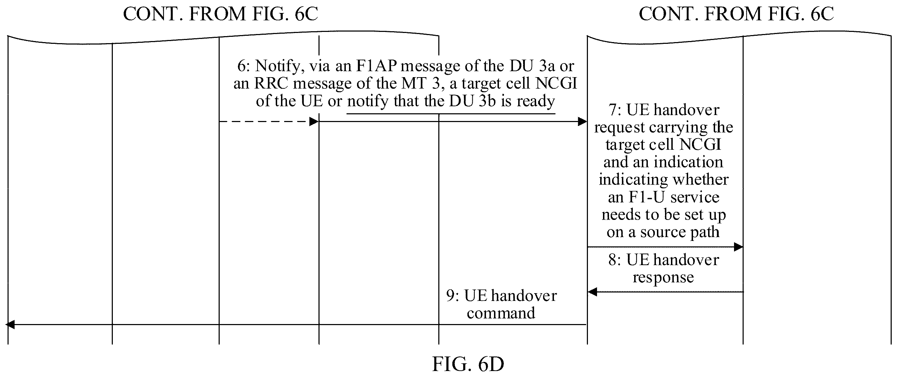

FIG. 6A to FIG. 6D show a third example process 600 of a terminal handover in a measurement-free case according to an embodiment of the present disclosure. For clarity of discussion without any limitation, the process 600 is discussed with reference to FIG. 1A. In this embodiment, a relay node 110 is implemented as an IAB node 3 601, a first DU of the relay node 110 is implemented as a DU 3a 603, a second DU of the relay node 110 is implemented as a DU 3b 605, an MT of the relay node 110 is implemented as an MT 3 607, a CU of a first donor node 120 is implemented as a CU 1 609, a CU of a second donor node 130 is implemented as a CU 2 611, and a terminal 140 is implemented as a UE 613.

In the process 600, an option 1, an option 2, or an option 3 is optional.

In the option 1, the CU 2 611 obtains, from the CU 1 609, an NCGI of a cell that is served by the DU 3b 605 and that is expected to be activated. In step 1, a correspondence between a cell ID of a cell served by the DU 3b 605 and a UE ID or a cell ID of a cell served by the DU 3a 603 is reported, or a cell ID of the cell that is served by the DU 3b 605 and that is expected to be activated is reported via an F1AP message of the DU 3a 603 or an RRC message of the MT 3 607. The cell that is served by the DU 3b 605 and that is expected to be activated is a cell corresponding to an activated cell served by the DU 3a 603. In step 2, the CU 1 609 includes, in an interface message (for example, an XN interface message) sent to the CU 2 611, the NCGI of the cell that is served by the DU 3b 605 and that is expected to be activated. The information may be carried in an MT handover request, or may be an independent interface message. In step 3, the DU 3b 605 is started, and a resource of the cell served by the DU 3b 605 is configured to correspond to that of the cell served by the DU 3a 603. For example, the resource configuration of the cell served by the DU 3b 605 and the cell served by the DU 3a 603 is that beam directions and/or slot configurations are the same, and the cells are staggered by using frequencies. In step 4, the DU 3b 605 initiates an F1 setup request message to the CU 2 611, to request to set up an F1-C. For example, the F1 setup request message carries NCGIs of all cells. In step 5, the CU 2 611 indicates, in an F1 setup response based on the NCGI of the cell that is expected to be activated and that is obtained in step 3, the DU 3b 605 to activate the corresponding cell.

In the option 2, the CU 2 611 obtains, from the DU 3b 605 through an F1 interface, an NCGI of a cell that is served by the DU 3b 605 and that is expected to be activated. In step 1, the DU 3b 605 is started, and a resource of a cell served by the DU 3b 605 is configured to correspond to that of a cell served by the DU 3a 603. For example, the resource configuration of the cell served by the DU 3b 605 and the cell served by the DU 3a 603 is that beam directions and/or slot configurations are the same, and the cells are staggered by using frequencies. In step 2, the DU 3b 605 initiates an F1 setup request message to the CU 2 611, to request to set up an F1-C. For example, the F1 setup request message carries NCGIs of all cells, and indicates cells (that is, cells that are served by the DU 3b 605 and whose corresponding cells served by the DU 3a 603 are activated) that are expected to be activated. In step 3, the CU 2 611 indicates, in an F1 setup response based on the NCGI of the cell that is expected to be activated and that is obtained in step 2, the DU 3b 605 to activate the corresponding cell.

In the option 3, the CU 2 611 obtains, through, for example, an XN interface in combination with an F1 interface, an NCGI of a cell that is expected to be activated. In step 1, a correspondence between a cell ID of a cell served by the DU 3b 605 and a UE ID or a cell ID of a cell served by the DU 3a 603 is reported, or a cell ID of the cell that is served by the DU 3b 605 and that is expected to be activated is reported via an F1AP message of the DU 3a 603 or an RRC message of the MT 3 607. The cell that is served by the DU 3b 605 and that is expected to be activated is a cell corresponding to an activated cell served by the DU 3a 603. In step 2, the CU 1 609 includes, in an interface message (for example, an XN interface message) sent to the CU 2 611, an NCGI of the activated cell served by the DU 3a 603, or a correspondence between the cell served by the DU 3a 603 and the cell served by the DU 3b 605. The information may be carried in an MT HO REQUEST, or may be an independent interface message. In step 3, the DU 3b 605 is started, and a resource of the cell served by the DU 3b 605 is configured to correspond to that of the cell served by the DU 3a 603. For example, the resource configuration of the cell served by the DU 3b 605 and the cell served by the DU 3a 603 is that beam directions and/or slot configurations are the same, and the cells are staggered by using frequencies. In step 4, the DU 3b 605 initiates an F1 setup request message to the CU 2 611, to request to set up an F1-C. For example, the F1 setup request message carries NCGIs of all cells, and the correspondence between the cell served by the DU 3a 603 and the cell served by the DU 3b 605, or the NCGI of the activated cell served by the DU 3a 603. The information in step 4 is a complementary option of the information in step 2. In step 5, the CU 2 611 obtains, based on steps 2 and 4, NCGIs of cells that are served by the DU 3b 605 and that are expected to be activated, where these NCGIs are generated based on a correspondence between the NCGI of the cell served by the DU 3a 603 and that of the cell served by the DU 3b 605 and the activated cell served by the DU 3a 603 that are obtained in steps 2 and 4. The CU 2 611 indicates, in an F1 setup response, the DU 3b 605 to activate the corresponding cell.

In this manner, by performing any one of the options 1 to 3, the CU 2 611 may learn of the identifier of the cell that is served by the DU 3b 605 and that is expected to be activated, and activate the cell served by the DU 3b 605 based on the identifier. However, a target situation of each UE is still unknown to the CU 2 611, and therefore the CU 1 609 needs to notify the CU 2 611 in a UE handover request. Specific solutions are as follows.

In step 6, the CU 1 609 is notified of a target cell NCGI of the UE or an indication indicating that the DU 3b 605 is ready is carried via an F1AP message of the DU 3a 603 or an RRC message of the MT 3 607. If the underlined solution in the option 1 or the option 3 is used in the foregoing steps, the CU 1 609 already knows a target cell ID of each UE. Therefore, the IAB node 3 only needs to notify the CU 1 609 that the DU 3b 605 is ready, and the CU 1 609 may initiate the UE handover request to the CU 2 611. If another solution is used in the foregoing steps, the CU 1 609 knows only the cell ID of the activated cell served by the DU 3b 605, and does not know the target cell ID of each UE. Therefore, the IAB node 3 needs to notify the CU 1 609 of a target cell NCGI of each UE.

In step 7, the CU 1 609 sends the UE handover request to the CU 2 611. The UE handover request carries the target cell NCGI of each UE and an indication indicating whether an F1-U needs to be set up on a source path. In step 8, the CU 2 611 returns a UE handover response to the CU 1 609. In step 9, the CU 1 609 delivers a handover command to the UE 613.

In this way, the CU 2 611 obtains, through interaction (for example, XN interaction) with the CU 1 609 and/or F1 interaction with the DU 3b 605, the NCGIs of the cells that are served by the DU 3b 605 and that are expected to be activated, that is, the cells that are served by the DU 3b 605 and whose corresponding cells served by the DU 3a 603 are activated, and indicates the DU 3b 605 to activate the cells based on the NCGIs. After the cells served by the DU 3b 605 are activated, the relay node may directly report a target cell of the UE, to avoid a measurement process of the UE. Without waiting for measurement and reporting of each UE, after the DU 3b 605 performs the activation, the boundary node directly reports the target cell of the UE based on the correspondence between the source cell and the target cell that are served by the DU 3b 605 and the DU 3a 603. Therefore, execution time of full migration and service interruption time of the UE are reduced.

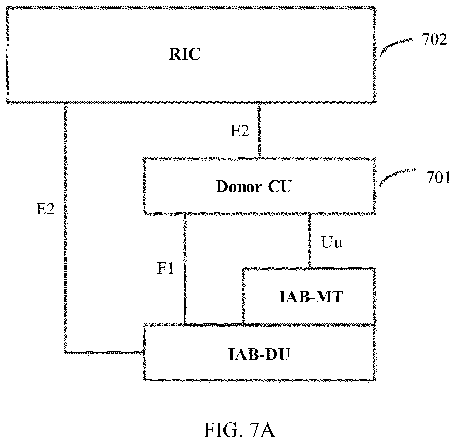

FIG. 7A shows an O-RAN based IAB architecture that may be implemented according to an embodiment of the present disclosure. In comparison with a conventional RAN architecture, in the O-RAN architecture, further separation of functions and interface openness between different network elements are emphasized. As shown in FIG. 7A, in the O-RAN, a layer of controller is further disposed above a donor CU 701, that is, a near real-time (near real-time, near-RT) RAN intelligent controller (RIC) 702. The RIC 702 controls other network elements through various interfaces. A core idea of the O-RAN is to simplify functions of each network element and weaken a processing function, and perform controlling through a unified interface, to make the RAN more open and enable more equipment vendors to participate. The O-RAN is an emerging standard organization independent of the 3GPP, and is an O-RAN architecture that may appear in the future according to this embodiment.

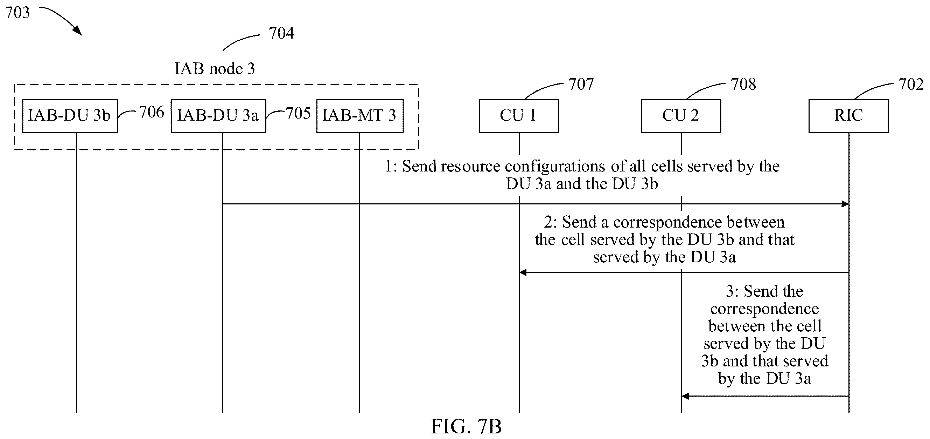

FIG. 7B shows a third example process 703 of a terminal handover in a measurement-free case according to an embodiment of the present disclosure. The steps shown in the third example process 703 are mainly used to determine a correspondence between a source cell and a target cell. For clarity of discussion without any limitation, the process 703 is discussed with reference to FIG. 1A and FIG. 7A. In this embodiment, a relay node 110 is implemented as an IAB node 3 704, a first DU of the relay node 110 is implemented as a DU 3a 705, a second DU of the relay node 110 is implemented as a DU 3b 706, a CU of a first donor node 120 is implemented as a CU 1 707, and a CU of a second donor node 130 is implemented as a CU 2 708.

The process 703 provides a mechanism for generating a correspondence between a cell served by the DU 3b 706 and that served by the DU 3a 705 in an O-RAN architecture. In the O-RAN architecture, a processing function of the IAB-DU is weakened, and the IAB-DU is not responsible for generating a correspondence between the DU 3b 706 and the DU 3a 705. Therefore, the boundary node 704 cannot report the correspondence between the cell served by the DU 3b 706 and that served by the DU 3a 705 to the CU 1 707. Before the DU 3b 706 is started, in step 1, the DU 3a 705 reports, to the RIC 702 through an E2 interface, a resource configuration of each cell served by the DU 3a 705 and the DU 3b 706 to be started, so that the RIC 702 determines cells having a correspondence. Then, in steps 2 and 3, the RIC 702 sends the correspondence between the cells to the CU 1 707 and/or the CU 2 708 through the E2 interface. After obtaining the correspondence between the cell served by the DU 3b 706 and that served by the DU 3a 705, the CU 1 709 and/or the CU 2 708 may obtain a target cell of a UE based on the correspondence. For subsequent operations, refer to the foregoing processes in FIG. 4A and FIG. 4B to FIG. 6A to FIG. 6D.

In this way, based on the E2 interface in the O-RAN architecture, the CU 1 707 and/or the CU 2 708 may learn of the target cell of the UE via the RIC 702, to avoid a measurement process of the UE, and reduce execution time of full migration and service interruption time of the UE.

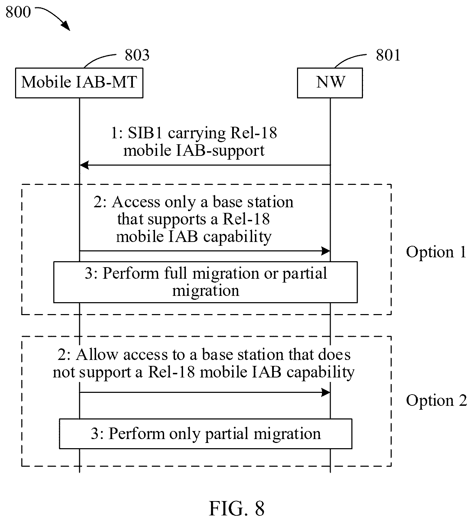

FIG. 8 shows a migration process 800 according to an embodiment of the present disclosure. The process 800 relates to a network side (NW) 801 and a mobile IAB-MT 803.

A restriction condition for initial access of the mobile IAB-MT is provided in this embodiment. If an IAB node moves in a large range, a donor base station needs to support full migration. Therefore, in comparison with a donor base station of a Rel-17/Release 16 (Rel-16), a donor base station of a Rel-18 that supports the full migration needs to be upgraded to some extent. This embodiment provides a solution in which the network side indicates a capability of the network side to the mobile IAB node by broadcasting a Rel-18 mobile IAB-support (mobile IAB-support) or full migration-support (full migration-support) information element in a system message.

As shown in FIG. 8, in step 1, the network side 801 (for example, a DU in a CU range) broadcasts, in the system message, a Rel-18 full migration-support capability of the network side 801 to all UEs including the IAB-MT 803. For example, the system message may include a system information block 1 (SIB1 message). For example, a name of the used information element may include Rel-18 mobile IAB-support or full migration-support. For example, for a fixedly deployed IAB-MT, the information element in step 1 may be ignored. Next, an option 1 and an option 2 are optional.

In the option 1, in step 2, the mobile IAB-MT 803 may initiate random access only to a base station that supports a Rel-18 mobile IAB capability (for example, supports Rel-18 full migration). Then, in step 3, the network side 801 may perform full migration or partial migration.

In the option 2, in step 2, the mobile IAB-MT 803 may access a base station that does not support Rel-18 full migration. Then, in step 3, the network side 801 may perform only partial migration on the IAB-MT 803.

In this embodiment, by broadcasting the Rel-18 full migration-support capability by the network side, the mobile IAB node may choose to access only the base station that supports the Rel-18 full migration, or access a base station that supports only Rel-16/Rel-17 IAB functions and perform only the partial migration in subsequent time. In this manner, this embodiment provides a more flexible selection for migration of the Rel-18 mobile IAB node. For example, the network side may broadcast the capability of the network side, and then the IAB node may select, based on the capability, a network node to be accessed.

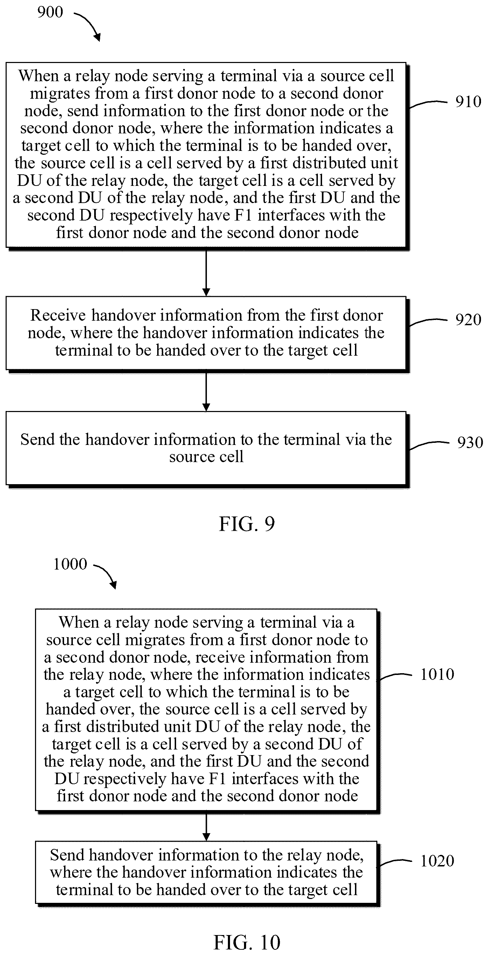

FIG. 9 is a schematic flowchart of a method 900 implemented at a relay node according to an embodiment of the present disclosure. In a possible implementation, the method 900 may be implemented by the relay node 110 in the communication system 100. In another possible implementation, the method 900 may alternatively be implemented by another communication device independent of the communication system 100. In an example, the following describes the method 900 by using an example in which the method is implemented by the relay node 110 in the communication system 100.

In a block 910, when the relay node 110 serving the terminal 140 via a source cell migrates from the first donor node 120 to the second donor node 130, the relay node 110 sends information to the first donor node 120 or the second donor node 130, where the information indicates a target cell to which the terminal 140 is to be handed over, the source cell is a cell served by a first DU of the relay node 110, the target cell is a cell served by a second DU of the relay node 110, and the first DU and the second DU respectively have F1 interfaces with the first donor node 120 and the second donor node 130. In a block 920, the relay node 110 receives handover information from the first donor node 120, where the handover information indicates the terminal 140 to be handed over to the target cell. In a block 830, the relay node 110 sends the handover information to the terminal 140 via the source cell.

In some embodiments, the information sent to the first donor node 120 includes a correspondence between the target cell and the terminal 140 or a correspondence between the target cell and the source cell.

In some embodiments, the information sent to the second donor node 130 includes a correspondence between the target cell and the terminal 140.

In some embodiments, the sending information to the first donor node 120 includes: When a CU of the first donor node 120 sends a handover request used for a mobile termination MT of the relay node 110 to a CU of the second donor node 130 earlier than an interface is set up between the second DU of the relay node 110 and the CU of the second donor node 130, the first DU or the MT of the relay node 110 sends the information to the CU of the first donor node 120. In some embodiments, the method 900 further includes: The relay node 110 starts the second DU after sending the information to the CU of the first donor node 120. In some embodiments, the starting the second DU includes: The relay node 110 configures a resource of the target cell to correspond to a resource of the source cell. In some embodiments, the configuring a resource of the target cell to correspond to a resource of the source cell includes: configuring a beam direction and/or a time domain resource of the target cell to be the same as a beam direction and/or a time domain resource of the source cell; and configuring a frequency domain resource of the target cell not to overlap a frequency domain resource of the source cell. In some embodiments, the sending information to the first donor node 120 includes at least one of the following: The first DU of the relay node 110 sends the information via an F1 application protocol F 1AP message; and the MT of the relay node 110 sends the information via a radio resource control RRC message.

In some embodiments, the sending information to the second donor node 130 includes: When an interface is set up between the second DU of the relay node 110 and a CU of the second donor node 130 earlier than a CU of the first donor node 120 sends a handover request used for a mobile termination MT of the relay node 110 to the CU of the second donor node 130, the second DU of the relay node 110 sends the information to the CU of the second donor node 130. In some embodiments, the method 900 further includes: The relay node 110 starts the second DU before sending the information to the CU of the second donor node 130. In some embodiments, the starting the second DU includes: The relay node 110 configures a resource of the target cell to correspond to a resource of the source cell. In some embodiments, the configuring a resource of the target cell to correspond to a resource of the source cell includes: configuring a beam direction and/or a time domain resource of the target cell to be the same as a beam direction and/or a time domain resource of the source cell; and configuring a frequency domain resource of the target cell not to overlap a frequency domain resource of the source cell. In some embodiments, the information is sent via an interface setup request message.

In some embodiments, the method 900 further includes at least one of the following: The first DU of the relay node 110 sends, to the CU of the first donor node 120, an indication indicating that the second DU is ready to provide a service for the terminal 140; or the mobile termination MT of the relay node 110 sends an indication to the CU of the first donor node 120.

In some embodiments, the method 900 further includes: The second DU of the relay node 110 receives an interface setup response message from the CU of the second donor node 130, where the interface setup response message indicates a to-be-activated cell to the second DU, and the to-be-activated cell is determined based on the target cell.

FIG. 10 is a schematic flowchart of a method 1000 implemented at a first donor node according to some embodiments of the present disclosure. In a possible implementation, the method 1000 may be implemented by the first donor node 120 in the communication system 100. In another possible implementation, the method 1000 may alternatively be implemented by another communication device independent of the communication system 100. In an example, the following describes the method 1000 by using an example in which the method is implemented by the first donor node 120 in the communication system 100.

In a block 1010, when the relay node 110 serving the terminal 140 via a source cell migrates from the first donor node 120 to the second donor node 130, the first donor node 120 receives information from the relay node 110, where the information indicates a target cell to which the terminal 140 is to be handed over, the source cell is a cell served by a first DU of the relay node 110, the target cell is a cell served by a second DU of the relay node 110, and the first DU and the second DU respectively have F1 interfaces with the first donor node 120 and the second donor node 130. In a block 1020, the first donor node 120 sends handover information to the relay node 110, where the handover information indicates the terminal 140 to be handed over to the target cell.

In some embodiments, the information includes a correspondence between the target cell and the terminal 140 or a correspondence between the target cell and the source cell.

In some embodiments, the method 1000 further includes: A CU of the first donor node 120 sends a handover request to a CU of the second donor node 130, where the handover request is used for at least one of the following two: the handover of the terminal 140, where the handover request indicates the target cell; and a handover of a mobile termination MT of the relay node 110 from the CU of the first donor node 120 to the CU of the second donor node 130. In some embodiments, the method 1000 further includes: indicating the target cell by including an identifier of the target cell and an identifier of the second donor node 130 in the handover request. In some embodiments, the handover request further includes the following indication: whether the second donor node 130 needs to send a user plane service of the terminal 140 through a path associated with the first donor node 120.

In some embodiments, the receiving information from the relay node 110 includes: When the CU of the first donor node 120 sends the handover request used for the mobile termination MT of the relay node 110 to the CU of the second donor node 130 earlier than an interface is set up between the second DU of the relay node 110 and the CU of the second donor node 130, the CU of the first donor node 120 receives the information from the first DU or the MT of the relay node 110. In some embodiments, the receiving the information from the first DU includes: The CU of the first donor node 120 receives the information from the first DU via an F1 application protocol F1AP message. In some embodiments, the receiving the information from the MT includes: The CU of the first donor node 120 receives the information from the MT via a radio resource control RRC message.

In some embodiments, the method 1000 further includes at least one of the following: The CU of the first donor node 120 receives, from the first DU of the relay node 110, an indication indicating that the second DU is ready to provide a service for the terminal 140; or the CU of the first donor node 120 receives an indication from the mobile termination MT of the relay node 110.

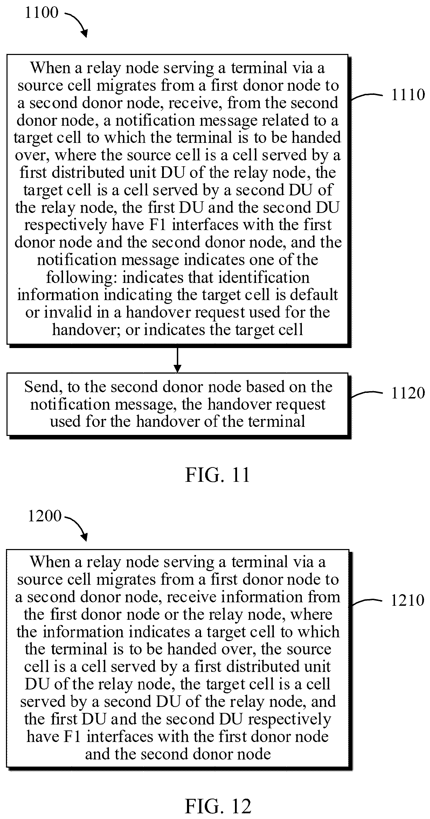

FIG. 11 is a schematic flowchart of a method 1100 implemented at a first donor node according to some embodiments of the present disclosure. In a possible implementation, the method 1100 may be implemented by the first donor node 120 in the communication system 100. In another possible implementation, the method 1100 may alternatively be implemented by another communication device independent of the communication system 100. In an example, the following describes the method 1100 by using an example in which the method is implemented by the first donor node 120 in the communication system 100.

In a block 1110, when the relay node 110 serving the terminal 140 via a source cell migrates from the first donor node 120 to the second donor node 130, the first donor node 120 receives, from the second donor node 130, a notification message related to a target cell to which the terminal 140 is to be handed over, where the source cell is a cell served by a first DU of the relay node 110, the target cell is a cell served by a second DU of the relay node 110, the first DU and the second DU respectively have F1 interfaces with the first donor node 120 and the second donor node 130, and the notification message indicates one of the following: indicates that identification information indicating the target cell is default or invalid in a handover request used for the handover; or indicates the target cell. In a block 1120, the first donor node 120 sends, to the second donor node 130 based on the notification message, the handover request used for the handover of the terminal 140.

In some embodiments, the sending the handover request includes: If determining that the notification message indicates that the identification information is default or invalid in the handover request, the first donor node 120 sends, to the second donor node 130, the handover request in which the identification information is default or invalid.

In some embodiments, the sending the handover request includes: If determining that the notification message indicates the target cell, the first donor node 120 sends, to the second donor node 130, the handover request indicating the target cell.

In some embodiments, the handover request further includes the following indication: whether the second donor node 130 needs to send a user plane service of the terminal 140 through a path associated with the first donor node 120.

FIG. 12 is a schematic flowchart of a method 1200 implemented at a second donor node according to an embodiment of the present disclosure. In a possible implementation, the method 1200 may be implemented by the second donor node 130 in the communication system 100. In another possible implementation, the method 1200 may alternatively be implemented by another communication device independent of the communication system 100. In an example, the following describes the method 1200 by using an example in which the method is implemented by the second donor node 130 in the communication system 100.

In a block 1210, when the relay node 110 serving the terminal 140 via a source cell migrates from the first donor node 120 to the second donor node 130, the second donor node 130 receives information from the first donor node 120 or the relay node 110, where the information indicates a target cell to which the terminal 140 is to be handed over, the source cell is a cell served by a first DU of the relay node 110, the target cell is a cell served by a second DU of the relay node 110, and the first DU and the second DU respectively have F1 interfaces with the first donor node 120 and the second donor node 130.

In some embodiments, the receiving information from the first donor node 120 includes: A CU of the second donor node 130 receives, from a CU of the first donor node 120, a handover request including the information, where the handover request is used for at least one of the following two: the handover of the terminal 140; and a handover of a mobile termination MT of the relay node 110 from the CU of the first donor node 120 to the CU of the second donor node 130. In some embodiments, the handover request further includes the following indication: whether the second donor node 130 needs to send a user plane service of the terminal 140 through a path associated with the first donor node 120. In some embodiments, the method 1200 further includes: The second donor node 130 sends a path setup request to the first donor node 120 based on the indication included in the handover request. In some embodiments, the method 1200 further includes: The second donor node 130 performs an admission decision on the MT of the relay node 110 and the terminal 140.

In some embodiments, the method 1200 further includes: The CU of the second donor node 130 determines, based on the target cell, a cell to be activated by the second DU. In addition, the CU of the second donor node 130 sends an interface setup response message to the second DU of the relay node 110, where the interface setup response message indicates the to-be-activated cell to the second DU.

In some embodiments, the receiving information from the relay node 110 includes: When an interface is set up between a CU of the second donor node 130 and the second DU of the relay node 110 earlier than a CU of the first donor node 120 sends a handover request used for a mobile termination MT of the relay node 110 to the CU of the second donor node 130, the CU of the second donor node 130 receives the information from the second DU of the relay node 110. In some embodiments, the information is received via an interface setup request message. In some embodiments, the method 1200 further includes: The CU of the second donor node 130 sends a notification message to the CU of the first donor node 120, where the notification message indicates that identification information indicating the target cell is default or invalid in a handover request used for the handover. In addition, the CU of the second donor node 130 receives the handover request from the CU of the first donor node 120. In some embodiments, the method 1200 further includes: The CU of the second donor node 130 sends a notification message to the CU of the first donor node 120, where the notification message indicates the target cell. In addition, the CU of the second donor node 130 receives, from the CU of the first donor node 120, a handover request used for the handover, where the handover request indicates the target cell.

In this manner, without using a measurement report of the terminal 140, the donor node may directly learn, from the information received by the relay node, of the target cell to which the terminal 140 is to be handed over. In this way, signaling overheads are reduced, migration execution time is shortened, and communication efficiency is improved.

In addition, according to a conventional random access technology, in an initial network access process and a handover process, the UE obtains a timing advance (TA) and a selected beam of the target cell through a random access process. The TA reflects a propagation delay of s signal and is related to a location of the UE relative to a gNB. Because distances between UEs served by the gNB and the gNB are different, uplink (UL) signals of the UEs need to be sent at different moments (that is, different TAs), to ensure that moments at which the signals arrive at the gNB are the same, so as to implement uplink synchronization.

For example, in a random access process of an inter-CU (inter-CU) handover, a source CU configures a measurement object for the UE via a radio resource control (RRC) message, to trigger the UE to perform neighboring cell measurement. The UE sends a measurement report to the source CU via an RRC message. The measurement report includes a measurement value of the measurement object. Then, the source CU selects a target cell based on the measurement report, and sends a handover request message to a target CU, where the handover request message carries the target cell and a measurement result of the UE on at least one beam (for example, represented by a synchronization signal block (SSB) index and/or a channel state information reference signal (CSI-RS) index) in the target cell. Then, the target CU sends a handover request acknowledgment to the source CU, where the handover request acknowledgment carries a random access channel (RACH resource) (an SSB index, a CSI-RS index, or a preamble index) corresponding to each beam. The source CU sends the foregoing information to the UE via a handover command message. The UE selects an SSB index whose signal quality is higher than a threshold and a preamble corresponding to the SSB index, and sends the preamble to a target gNB on a beam corresponding to the SSB index selected by the UE. This message is referred to as a message 1 (msg1). There is a fixed correspondence between the SSB index, the preamble, and a beam direction. Then, the target gNB obtains a value of a random access radio network temporary identifier (RA-RNTI) based on a resource (beam) selected by the UE, and sends a message 2 (msg2) to the UE on a physical downlink control channel (PDCCH) scrambled by the RA-RNTI and on the beam corresponding to the SSB index selected by the UE. The UE correctly receives the msg2 based on the RA-RNTI. The msg2 includes TA information of the UE used for uplink synchronization and initial uplink resource allocation information (UL grant).

One of functions of the random access is the TA obtaining and the beam selection. The inventor notes that, in the scenario considered in the present invention, the first DU and the second DU are a same physical DU, that is, locations of the source cell and the target cell relative to the UE are the same, and the TA of the UE does not change. Therefore, the UE may obtain a new TA without a RACH process. In addition, it is proposed in the foregoing embodiments that the resource of the target cell be configured to correspond to the resource of the source cell. Therefore, for example, the beam direction and/or the time domain resource of the target cell may be configured to be the same as the beam direction and/or the time domain resource of the source cell; and the frequency domain resource of the target cell may be configured not to overlap the frequency domain resource of the source cell. Because the beam direction of the source cell is the same as that of the target cell, for the beam selection, a beam that is the same as that in the source cell may be directly selected without a random access process. That is, the foregoing two functions of the random access have been resolved in the solution architecture provided in the foregoing embodiments. Therefore, considering that the random access process causes great energy consumption, the inventor considers that random access-less (RACH-less) may be used to achieve better energy saving.

According to another conventional technology, in a random access-less solution of a layer 1 or layer 2 mobility subject, a source gNB may directly use, based on a measurement report of the UE on a beam of the target cell, a medium access control control element (MAC CE) to indicate a beam of the UE in the target cell.

However, in current discussion about the random access-less, the UE needs to measure the beam of the target cell, and determine, based on a measurement result, the beam used by the UE in the target cell. Considering that the beam measurement and reporting performed by the UE still cause large signaling overheads, a manner of determining the target beam needs to be improved, to achieve better energy saving.

In view of the foregoing analysis and research, embodiments of the present disclosure provide a communication method. In the method, a terminal receives indication information from a first donor device or a relay node. The indication information indicates a target beam to be used by the terminal in a target cell to which the terminal is handed over, and the target beam is the same as a source beam used by the terminal in a source cell. For example, the indication information may indicate at least one of the following: a beam used by the terminal in a same direction or index as the source beam used by the terminal in the source cell; an index of the target beam; or an index of the source beam.

In this manner, the beam used by the terminal in the target cell may be determined without performing beam measurement. In this way, resource overheads and signaling overheads of random access are effectively reduced, and transmission efficiency is improved.

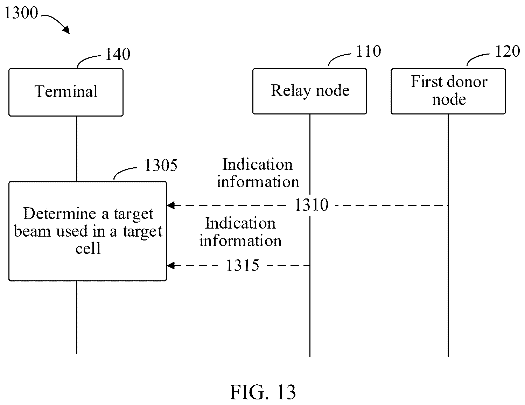

FIG. 13 is a signaling interaction diagram of a terminal handover process in a beam measurement-free case according to an embodiment of the present disclosure. For clarity of discussion without any limitation, the process 1300 is discussed with reference to FIG. 1A.

In the process 1300, when a distributed unit DU of the relay node 110 serving the terminal 140 via a source cell migrates from the first donor node 120 to the second donor node 130, the terminal 140 determines (1305) a target beam to be used in a target cell to which the terminal 140 is handed over. For example, the target beam may be the same as a source beam used by the terminal 140 in the source cell. For example, being the same as the source beam may refer to a beam in a same direction or index as the source beam. For example, the index of the beam may be an SSB index or a CSI-RS index. The source cell is a cell served by a first DU of the relay node 110, and the target cell is a cell served by a second DU of the relay node 110. Then, the terminal 140 may perform a subsequent communication process by using the determined target beam. The first DU and the second DU respectively have F1 interfaces with the first donor node 120 and the second donor node 130. The first CU may be a CU of the relay node 110, and the second CU may be a target CU of the relay node 110. It should be understood that the first DU and the second DU of the relay node 110 may be logical DUs. The source cell served by the first DU and the target cell served by the second DU are isolated from each other, that is, are configured with mutually isolated resources.

In some embodiments, as shown in FIG. 13, the first donor device 120 may send (1310) indication information to the terminal 140, where the indication information indicates the target beam to be used by the terminal 140 in the target cell to which the terminal 140 is handed over. For example, the indication information may indicate the beam used by the terminal 140 in the same direction or index as the source beam used by the terminal 140 in the source cell. In another example, the indication information may indicate an index of the target beam. In still another example, the indication information may indicate an index of the source beam. Then, the terminal 140 may determine the target beam based on the received indication information. In an example, the indication information may be included in a handover command used for the terminal 140.

In an example, the first donor device may obtain, from the relay node 110 (for example, the first CU of the relay node 110), beam information used to determine the target beam to be used by the terminal 140 in the target cell. For example, the beam information may indicate the beam used in the target cell in the same direction or index as the source beam used in the source cell. In this case, it may be considered that a correspondence between an actual physical beam direction and a time domain resource of the source cell and a correspondence between an actual physical beam direction and a time domain resource of the target cell may be completely the same. In this case, it may be considered that beams of the source cell and the target cell are completely the same. Alternatively or additionally, the beam information may indicate a correspondence between the beam in the source cell and the beam in the target cell, for example, a correspondence between a beam index (for example, the SSB index and/or the CSI-RS index) in the source cell and a beam index in the target cell. In this case, the source cell and the target cell may have the same beam direction, but time at which each beam direction appears may be different (for example, a same beam direction may be represented as different SSB indexes and/or CSI-RS indexes in the source cell and the target cell). In this case, a beam correspondence needs to be used to represent a correspondence between indexes of beams (that is, the beams used in the source cell and the target cell) in a same direction. Therefore, the beam information may indicate a correspondence between SSB indexes and/or a correspondence between CSI-RS indexes in the source cell and the target cell. It should be understood that the foregoing steps may be performed without performing the action 1310. The protection scope of the present disclosure is not limited herein.

In another example, the second donor node 130 may send, to the first donor device, beam information used to determine the target beam to be used by the terminal 140 in the target cell. For example, the beam information may indicate the beam used in the target cell in the same direction or index as the source beam used in the source cell, and/or a correspondence between the beam in the source cell and the beam in the target cell. Optionally, the relay node 110 (for example, the second CU of the relay node 110) may send, to the second donor node 130 via, for example, an F1 message (for example, an F1 setup request message used to request to set up an F1 interface), a beam indication used to determine the target beam to be used by the terminal 140 in the target cell. For example, the beam indication indicates the beam used in the target cell in the same direction or index as the source beam used in the source cell, and/or the correspondence between the beam in the source cell and the beam in the target cell. It should be understood that the foregoing steps may be performed without performing the action 1310. The protection scope of the present disclosure is not limited herein.

In some embodiments, after the target beam to be used is determined, the first donor node 120 may send, to the second donor node 130, beam indication information related to the target beam, for example, a handover request used for the terminal 140. The beam indication information may indicate the beam used in the target cell in the same direction or index as the source beam used in the source cell, the index of the target beam, and/or the index of the source beam. Then, the first donor device 120 may receive, from the second donor node 130, beam acknowledgment information related to the target beam, for example, an acknowledgment for the handover request. The beam acknowledgment indication may include an acknowledgment of the beam used in the target cell in the same direction or index as the source beam used in the source cell, and/or the index of the target beam. It should be understood that the foregoing steps may be performed without performing the action 1310. The protection scope of the present disclosure is not limited herein.

Alternatively or additionally, as shown in FIG. 13, the relay node 110 may send (1315), to the terminal 140, the indication information indicating the target beam to be used by the terminal 140 in the target cell to which the terminal 140 is handed over. For example, similarly, the indication information may indicate the beam used by the terminal 140 in the same direction or index as the source beam used by the terminal 140 in the source cell, the index of the target beam, and/or the index of the source beam. For example, the first DU of the relay node 110 may send the indication information to the terminal 140 via, for example, a MAC CE or downlink control information (DCI). Then, the terminal 140 may determine the target beam based on the indication information received from the relay node 110. In this case, a beam mapping relationship and a beam reuse indication may be preconfigured on the first DU (for example, preconfigured by an OAM).

Alternatively or additionally, using the target beam that is used in the target cell and that is the same as the source beam may be an implicit indication. In this way, the terminal 140 and network nodes (for example, the first donor device 120 and the second donor device 130) may understand interaction behavior thereof based on this agreement on determining the target beam as the same beam as the source beam. For example, the terminal 140 may determine, based on determining that the terminal 140 is in coverage of the mobile relay node 110 (for example, in a mobile vehicle), to use, in the target cell, the beam that is the same as that in the source cell.

The foregoing manner of determining the target beam provided in the present disclosure is also applicable to a UE intra-CU (intra-CU) handover scenario (for example, due to a cell PCI conflict caused by movement of the relay node 110, a PCI needs to be changed, and a CU of a donor node (for example, the donor node 110) controls the relay node 110 to generate a new cell (that is, a target cell), and uses a new PCI, where a beam direction of the target cell is the same as that of an old cell (that is, a source cell), the terminal 140 may be correspondingly handed over from the source cell to the target cell, and in this case, the handover is an intra-CU handover). In this scenario, interaction between CUs is not needed, and only the donor node needs to send indication information to the terminal 140, where the indication information indicates the target beam to be used by the terminal 140 in the target cell to which the terminal 140 is handed over. For example, the indication information may indicate a beam used by the terminal 140 in a same direction or index as a source beam used by the terminal 140 in the source cell, an index of the target beam, and/or the index of the source beam.

In this manner, the terminal may directly access the target cell by using the target beam that is the same as the source beam. In this way, the terminal in the mobile IAB scenario can correctly perform the cell handover based on the same beam. The terminal may access the target cell without performing a random access process. This reduces resource overheads and signaling overheads of random access.

The foregoing manner of determining the target beam provided in the present disclosure is also applicable to the terminal handover manner that is based on the random access in the measurement-free case described with reference to FIG. 2 to FIG. 8. In some embodiments, the second donor node 130 may directly determine an RACH resource based on the foregoing manner of determining the target beam (that is, may determine to use an RACH resource corresponding to the target beam that is the same as that in the source cell) rather than based on measurement and reporting of a user. For example, the second donor node 130 may indicate, to the first donor node, the RACH resource corresponding to the target beam that is the same as that in the source cell. In an example, the second donor node 130 may indicate, in an RRC container (RRC Container) in a handover request acknowledgment that is sent to the first donor node 120 and that is used for the terminal 140, the RACH resource corresponding to the target beam that is the same as (for example, in the same direction or index as) the source beam of the terminal 140 in the source cell. After receiving the handover request acknowledgment, the first donor node 120 may send a beam indication in the RRC Container to the terminal 140 via a handover command used for the terminal 140.

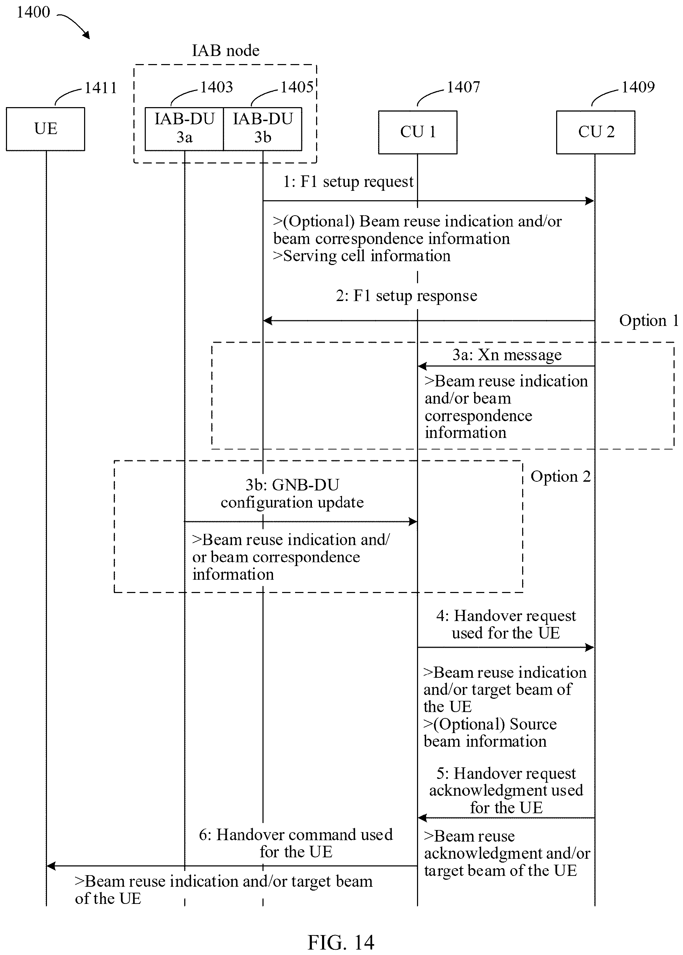

FIG. 14 shows an example process of a terminal handover in a beam measurement-free case according to an embodiment of the present disclosure. The process may be considered as a specific implementation of the terminal handover process in FIG. 13. For clarity of discussion without any limitation, the process 1400 is discussed with reference to FIG. 1A. In this embodiment, the relay node 110 is implemented as an IAB node 1401, a first DU of the relay node 110 is implemented as a DU 3a 1403, a second DU of the relay node 110 is implemented as a DU 3b 1405, a CU of the first donor node 120 is implemented as a CU 1 1407, a CU of the second donor node 130 is implemented as a CU 2 1409, and the terminal 140 is implemented as a UE 1411.

As shown in FIG. 14, in step 1, the IAB-DU 3b 1405 initiates an F1 setup request message to the CU 2 1409, to request to set up an F1 interface. Optionally, the F1 setup request message may carry beam reuse (or referred to as beam direction reuse) indication information (also referred to as a beam reuse indication), to, for example, indicate to use, as a target beam, a beam in a same direction or index as a source beam used in a source cell; and/or beam correspondence information, to, for example, indicate a correspondence (for example, a correspondence between SSB indexes and/or a correspondence between CSI-RS indexes) between beams in the source cell and a target cell.

In step 2, the CU 2 1409 returns an F1 setup response message to the IAB-DU 3b 1405. Next, step 3a and step 3b are optional. For example, in an embodiment in which the F1 setup request message carries the beam reuse (or referred to as the beam direction reuse) indication information, in step 3a, the CU 2 1409 may notify the CU 1 1407 of the beam reuse (or referred to as the beam direction reuse) indication information and/or the beam correspondence information. Alternatively, in step 3b, the IAB-DU 3a 1403 may notify the CU 1 1407 of the beam reuse (or referred to as the beam direction reuse) indication information and/or the beam correspondence information via an F1 message.

In step 4, the CU 1 1407 sends a handover request message used for the UE 1411 to the CU 2 1409. For example, the handover request carries the beam reuse (or referred to as the beam direction reuse) indication information, and/or target beam information (for example, the SSB index and/or the CSI-RS index) of the UE 1411. Alternatively, because the CU 2 1409 knows the beam correspondence information, beam information of the source beam used in the source cell may be directly carried in the handover request.

In step 5, the CU 2 1409 returns a handover request response message used for the UE 1411 to the CU 1 1407. For example, the handover request response message directly carries beam reuse (or referred to as beam direction reuse) acknowledgment information and/or the target beam information (for example, the SSB index and/or the CSI-RS index).

In step 6, the CU 1 1407 sends a handover command to the UE 1411. For example, the handover command may carry the beam reuse (or referred to as the beam direction reuse) indication information, and/or the target beam information (for example, the SSB index and/or the CSI-RS index) of the UE 1411. This step indicates the UE 1411 to communicate with a target station by using a correct beam.

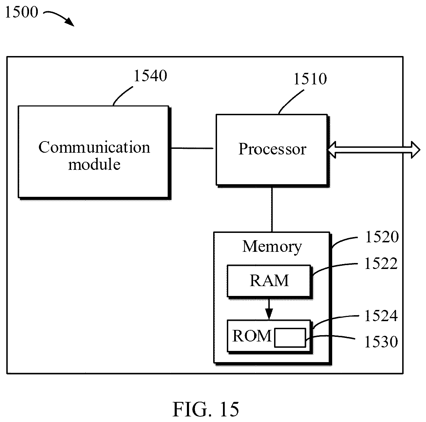

FIG. 15 is a block diagram of an example communication device 1500 that may be used to implement an embodiment of the present disclosure. The device 1500 may be implemented as or include the relay node 110, the first donor node 120, the second donor node 130, or the terminal 140 in FIG. 1A. As shown in the figure, the device 1500 includes one or more processors 1510, one or more memories 1520 coupled to the processor 1510, and a communication module 1540 coupled to the processor 1510.

The communication module 1540 may be configured to perform bidirectional communication. The communication module 1540 may have at least one communication interface for communication. The communication interface may include any interface necessary for communicating with another device.

The processor 1510 may be of any type suitable for a local technology network, and may include but is not limited to at least one of the following: one or more of a general-purpose computer, a dedicated computer, a microcontroller, a digital signal processor (Digital Signal Processor, DSP), or a controller-based multi-core controller architecture. The device 1500 may have a plurality of processors, such as application-specific integrated circuit chips, which in time belong to a clock synchronized with a main processor.

The memory 1520 may include one or more nonvolatile memories and one or more volatile memories. An example of the nonvolatile memory includes but is not limited to at least one of the following: a read-only memory (Read-Only Memory, ROM) 1524, an erasable programmable read-only memory (Erasable Programmable Read Only Memory, EPROM), a flash memory, a hard disk, a compact disc (Compact Disc, CD), a digital versatile disc (Digital Versatile Disc, DVD), or another magnetic storage and/or optical storage. An example of the volatile memory includes but is not limited to at least one of the following: a random access memory (Random Access Memory, RAM) 1522, or another volatile memory that does not last for power-off duration.

A computer program 1530 includes computer-executable instructions executed by an associated processor 1510. The program 1530 may be stored in the ROM 1524. The processor 1510 may perform any proper action and processing by loading the program 1530 into the RAM 1522.

Embodiments of the present disclosure may be implemented by using the program 1530, so that the device 1500 can perform any process discussed with reference to FIG. 1A to FIG. 12. Embodiments of the present disclosure may alternatively be implemented by using hardware or a combination of software and hardware.

The program 1530 may be tangibly included in a computer-readable medium, and the computer-readable medium may be included in the device 1500 (for example, in the memory 1520) or another storage device that is accessible by the device 1500. The program 1530 may be loaded from the computer-readable medium into the RAM 1522 for execution. The computer-readable medium may include any type of tangible nonvolatile memory, for example, a ROM, an EPROM, a flash memory, a hard disk, a CD, a DVD, or the like.

In some embodiments, the communication module 1540 in the device 1500 may be implemented as a transmitter and a receiver (or a transceiver). In addition, the device 1500 may further include one or more of a scheduler, a controller, and a radio frequency/antenna. Details are not described in the present disclosure.

For example, the device 1500 in FIG. 15 may be implemented as an electronic device, or may be implemented as a chip or a chip system in the electronic device. This is not limited in embodiments of the present disclosure.

When the communication device 1500 is a chip used in a terminal, the terminal chip implements functions of the terminal in the foregoing method embodiments. The terminal chip receives, via another module (for example, a radio frequency module or an antenna) in the terminal, information sent by a base station to the terminal. Alternatively, the terminal chip sends information to another module (for example, a radio frequency module or an antenna) in the terminal, where the information is sent by the terminal to a base station.

When the communication device 1500 is a module used in a base station, the module in the base station implements functions of the base station in the foregoing method embodiments. Th module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip of the base station, may be a CU, a DU, or another module, or may be an apparatus in an open radio access network (open radio access network, O-RAN) architecture, for example, an apparatus like an open CU or an open DU.

An embodiment of the present disclosure further provides a chip. The chip may include an input interface, an output interface, and a processing circuit. In this embodiment of the present disclosure, the input interface and the output interface may complete signaling or data exchange, and the processing circuit may complete generation and processing of signaling or data information.

An embodiment of the present disclosure further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of the present disclosure further provides a processor, configured to be coupled to a memory. The memory stores instructions. When the processor runs the instructions, the processor is enabled to perform the method and the function in any one of the foregoing embodiments.

An embodiment of the present disclosure further provides a computer program product including instructions. When the computer program product runs on a computer, the computer is enabled to perform the method and the function in any one of the foregoing embodiments.

An embodiment of the present disclosure further provides a computer-readable storage medium. The computer-readable storage medium stores computer instructions. When a processor runs the instructions, the processor is enabled to perform the method and the function in any one of the foregoing embodiments.

Usually, various embodiments of the present disclosure may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of the present disclosure are shown and described as block diagrams, flowcharts, or some other figures, it should be understood that the blocks, apparatuses, systems, techniques, or methods described in this specification may be implemented as, for example, non-limiting examples, hardware, software, firmware, dedicated circuits or logic, general-purpose hardware, controllers, other computing devices, or a combination thereof.

The present disclosure further provides at least one computer program product tangibly stored in a non-transitory computer-readable storage medium. The computer program product includes computer-executable instructions, such as instructions included in a program module, which are executed in a device on a real or virtual target processor to perform the process/method as described above with reference to the accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be located in both local and remote storage media.

Computer program code used for implementing the method in the present disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of the present disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in the present disclosure are described in a particular order in the accompanying drawings, this does not require or imply that these operations need to be performed in the particular order, or that all the shown operations need to be performed to achieve desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more apparatuses according to the present disclosure may be specific in one apparatus. Instead, features and functions of one apparatus described above may be further specific in a plurality of apparatuses.

The foregoing has described various implementations of the present disclosure. The foregoing descriptions are examples, are not exhaustive, and are not limited to the disclosed implementations. Many modifications and changes are clear to a person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

## Claims

1. A communication method, comprising:
when a relay node serving a terminal via a source cell migrates from a first donor node to a second donor node, sending, by the relay node, information to the first donor node or the second donor node, wherein the information indicates a target cell to which the terminal is to be handed over, the source cell is a cell served by a first distributed unit DU of the relay node, the target cell is a cell served by a second DU of the relay node, and the first DU and the second DU respectively have F1 interfaces with the first donor node and the second donor node;
receiving, by the relay node, handover information from the first donor node, wherein the handover information indicates the terminal to hand over to the target cell; and
sending, by the relay node, the handover information to the terminal via the source cell.

2. The method according to claim 1, wherein the information sent to the first donor node comprises:
a correspondence between the target cell and the terminal; or
a correspondence between the target cell and the source cell.

3. The method according to claim 1, wherein the information sent to the second donor node comprises:
a correspondence between the target cell and the terminal.

4. The method according to claim 1 or 2, wherein the sending information to the first donor node comprises:
when a central unit CU of the first donor node sends a handover request used for a mobile termination MT of the relay node to a CU of the second donor node earlier than an interface is set up between the second DU of the relay node and the CU of the second donor node, sending, by the first DU or the MT of the relay node, the information to the CU of the first donor node.

5. The method according to claim 1 or 3, wherein the sending information to the second donor node comprises:
when an interface is set up between the second DU of the relay node and a central unit CU of the second donor node earlier than a CU of the first donor node sends a handover request used for a mobile termination MT of the relay node to the CU of the second donor node, sending, by the second DU of the relay node, the information to the CU of the second donor node.

6. The method according to claim 4, further comprising:
starting, by the relay node, the second DU after sending the information to the CU of the first donor node.

7. The method according to claim 5, further comprising:
starting, by the relay node, the second DU before sending the information to the CU of the second donor node.

8. The method according to claim 6 or 7, wherein the starting the second DU comprises:
configuring, by the relay node, a resource of the target cell to correspond to a resource of the source cell.

9. The method according to claim 8, wherein the configuring a resource of the target cell to correspond to a resource of the source cell comprises:
configuring a beam direction and/or a time domain resource of the target cell to be the same as a beam direction and/or a time domain resource of the source cell; and
configuring a frequency domain resource of the target cell not to overlap a frequency domain resource of the source cell.

10. The method according to any one of claims 1, 2, and 4, wherein the sending information to the first donor node comprises at least one of the following:
sending, by the first DU of the relay node, the information via an F1 application protocol F1AP message; and
sending, by the mobile termination MT of the relay node, the information via a radio resource control RRC message.

11. The method according to claim 5, wherein the information is sent via an interface setup request message.

12. The method according to any one of claims 1 to 11, further comprising at least one of the following:
sending, by the first DU of the relay node to the central unit CU of the first donor node, an indication indicating that the second DU is ready to provide a service for the terminal; or
sending, by the mobile termination MT of the relay node to the CU of the first donor node, an indication indicating that the second DU is ready to provide a service for the terminal.

13. The method according to claims 1 to 12, further comprising:
receiving, by the second DU of the relay node, an interface setup response message from the central unit CU of the second donor node, wherein the interface setup response message indicates a to-be-activated cell to the second DU, and the to-be-activated cell is determined based on the target cell.

14. A communication method, comprising:
when a relay node serving a terminal via a source cell migrates from a first donor node to a second donor node, receiving, by the first donor node, information from the relay node, wherein the information indicates a target cell to which the terminal is to be handed over, the source cell is a cell served by a first distributed unit DU of the relay node, the target cell is a cell served by a second DU of the relay node, and the first DU and the second DU respectively have F1 interfaces with the first donor node and the second donor node; and
sending, by the first donor node, handover information to the relay node, wherein the handover information indicates the terminal to hand over to the target cell.

15. The method according to claim 14, wherein the information comprises:
a correspondence between the target cell and the terminal; or
a correspondence between the target cell and the source cell.

16. The method according to claim 14 or 15, further comprising:
sending, by a central unit CU of the first donor node, a handover request to a CU of the second donor node, wherein the handover request is used for at least one of the following two:
the handover of the terminal, wherein the handover request indicates the target cell; and
a handover of a mobile termination MT of the relay node from the CU of the first donor node to the CU of the second donor node.

17. The method according to claim 16, further comprising:
indicating the target cell by comprising an identifier of the target cell and an identifier of the second donor node in the handover request.

18. The method according to claim 16 or 17, wherein the handover request further comprises the following indication: whether the second donor node needs to send a user plane service of the terminal through a path associated with the first donor node.

19. The method according to any one of claims 14 to 18, wherein the receiving information from the relay node comprises:
when the central unit CU of the first donor node sends the handover request used for the mobile termination MT of the relay node to the CU of the second donor node earlier than an interface is set up between the second DU of the relay node and the CU of the second donor node, receiving, by the CU of the first donor node, the information from the first DU or the MT of the relay node.

20. The method according to claim 19, wherein the receiving the information from the first DU comprises:
receiving, by the CU of the first donor node, the information from the first DU via an F1 application protocol F1AP message.

21. The method according to claim 19, wherein the receiving the information from the MT comprises:
receiving, by the CU of the first donor node, the information from the MT via a radio resource control RRC message.

22. The method according to any one of claims 14 to 21, further comprising at least one of the following:
receiving, by the central unit CU of the first donor node from the first DU of the relay node, an indication indicating that the second DU is ready to provide a service for the terminal; or
receiving, by the CU of the first donor node, an indication from the mobile termination MT of the relay node.

23. A communication method, comprising:
when a relay node serving a terminal via a source cell migrates from a first donor node to a second donor node, receiving, by the second donor node, information from the relay node, wherein the information indicates a target cell to which the terminal is to be handed over, the source cell is a cell served by a first distributed unit DU of the relay node, the target cell is a cell served by a second DU of the relay node, and the first DU and the second DU respectively have F1 interfaces with the first donor node and the second donor node.

24. The method according to claim 23, further comprising:
performing, by the second donor node, an admission decision on a mobile termination MT of the relay node and the terminal.

25. The method according to claim 23 or 24, further comprising:
determining, by a CU of the second donor node based on the target cell, a cell to be activated by the second DU; and
sending, by the CU of the second donor node, an interface setup response message to the second DU of the relay node, wherein the interface setup response message indicates the to-be-activated cell to the second DU.

26. The method according to any one of claims 23 to 25, wherein the receiving information from the relay node comprises:
when an interface is set up between the central unit CU of the second donor node and the second DU of the relay node earlier than a CU of the first donor node sends a handover request used for the mobile termination MT of the relay node to the CU of the second donor node, receiving, by the CU of the second donor node, the information from the second DU of the relay node.

27. The method according to any one of claims 23 to 26, further comprising:
sending, by the CU of the second donor node, a notification message to the CU of the first donor node, wherein the notification message indicates that identification information indicating the target cell is default or invalid in a handover request used for the handover; and
receiving, by the CU of the second donor node, the handover request from the CU of the first donor node.

28. The method according to any one of claims 23 to 26, further comprising:
sending, by the CU of the second donor node, a notification message to the CU of the first donor node, wherein the notification message indicates the target cell; and
receiving, by the CU of the second donor node from the CU of the first donor node, a handover request used for the handover, wherein the handover request indicates the target cell.

29. A communication device, comprising a processor and a memory storing instructions, wherein when the instructions are executed by the processor, the communication device is enabled to perform the method according to any one of claims 1 to 13, any one of claims 14 to 22, or any one of claims 23 to 28.

30. A computer-readable storage medium, wherein the computer-readable storage medium stores instructions, and when the instructions are executed by a communication device, the communication device is enabled to perform the method according to any one of claims 1 to 13, any one of claims 14 to 22, or any one of claims 23 to 26.
